# EUROPEAN PATENT APPLICATION

(11) **EP 4 322 655 A1**
(43) Date of publication of application: **14.02.2024**
(21) Application number: 21938465.8
(22) Date of filing: 30.04.2021
(51) Int. Cl.: H04W 72/04

(54) **RESOURCE INDICATION METHOD, APPARATUS, AND SYSTEM**

(71) Applicant: Huawei Technologies Co., Ltd., Shenzhen, Guangdong 518129 (CN)
(72) Inventor: GAO, Lei, Shenzhen, Guangdong 518129 (CN); CHENG, Xingqing, Shenzhen, Guangdong 518129 (CN)
(74) Representative: Körber, Martin Hans
(86) International application number: PCT/CN2021/091457
(87) International publication number: WO 2022/226991

(57) **Abstract**

This application discloses a resource indication method, an apparatus, and a system, applied to the field of short-range communication, especially relating to scenarios such as smart driving, smart home, smart manufacturing, and the like. In the method, a first apparatus sends first information, where the first information indicates at least one time domain resource, and the at least one time domain resource includes a first time domain resource; and sends second information to a second apparatus on the first time domain resource, where the second information indicates a start moment K of data transmission between the first apparatus and the second apparatus. Through this solution, when data transmission between two apparatuses starts may be determined and indicated by the first apparatus. In this way, a resource conflict can be avoided, and resource use flexibility can be improved.

## Description

### TECHNICAL FIELD

This application relates to the field of communication technologies, provides a resource indication method, an apparatus, and a system, and in particular, relates to the field of short-range communication.

### BACKGROUND

With continuous development of global communication technologies, wireless communication technologies develop at a rapid speed, and applications related to wireless communication technologies are in full swing. Various intelligent terminals such as a smart wearable device, an intelligent transportation device, a smart home device, and a robot that support wireless communication technologies are gradually entering people's daily life.

In a wireless communication scenario in which an intelligent terminal is located, a plurality of communication domains may be included in a specific communication area or range. The communication domain is a system including a group of communication nodes having communication relationships and communication connection relationships (namely, communication links) between the communication nodes. One communication domain includes one master communication node (which may be referred to as a master node for short) and at least one slave communication node (which may be referred to as a slave node for short). The master node manages a time-frequency resource of the communication domain, and has a function of scheduling a resource for a communication link between communication nodes in the communication domain. The master node may allocate, to the slave node, a time domain resource corresponding to a quantity of transmission times that meets reliability. The master node avoids a resource conflict by keeping time domain resources allocated to different communication links from overlapping in time domain. In this way, each node starts to perform data transmission at a start moment of a time domain resource allocated to the node, and as a result, resource use flexibility is reduced.

### SUMMARY

This application provides a resource indication method, an apparatus, and a system, to improve resource use flexibility.

According to a first aspect, an embodiment of this application provides a resource indication method. The method may be performed by a first apparatus, or may be performed by a component (for example, a chip or a chip system) of the first apparatus. For example, the first apparatus may be an in-vehicle apparatus, or may be a non-in-vehicle apparatus. Optionally, the first apparatus is, for example, a device with a communication function such as a smart wearable device, a smart home device, a smart manufacturing device, or an intelligent transportation device, for example, a mobile phone, a vehicle, an unmanned aerial vehicle, an unmanned transportation vehicle, an automobile, a vehicle, or a robot, or the first apparatus may be a control apparatus in the foregoing device, for example, a cockpit domain controller (also referred to as an in-vehicle infotainment), a central control apparatus, or the like. In the method, the first apparatus sends first information, where the first information indicates at least one time domain resource, and each time domain resource is continuous in time domain; and sends second information to a second apparatus on a first time domain resource, where the second information indicates a start moment K of data transmission between the first apparatus and the second apparatus, a time domain resource used for the data transmission between the first apparatus and the second apparatus belongs to the first time domain resource, and the first time domain resource is one of the at least one time domain resource.

Optionally, the start moment K may be a start moment at which initial transmission and/or retransmission of data are/is started between the first apparatus and the second apparatus.

In the foregoing embodiment of this application, the first apparatus may configure at least one time domain resource for the second apparatus, and then send the second information to the second apparatus to indicate the start moment K for performing the data transmission with the second apparatus. The data transmission is performed in the first time domain resource. In other words, when the data transmission between the first apparatus and the second apparatus starts is determined by the first apparatus. This means that through the method provided in embodiments of this application, the first apparatus may further indicate a start moment of data transmission between two other apparatuses (for example, the first apparatus and another apparatus other than the second apparatus, or the second apparatus and another apparatus other than the first apparatus, or two other apparatuses other than the first apparatus and the second apparatus). In this way, a resource conflict can be avoided, and resource use flexibility can be improved.

In a possible design, before the first apparatus sends the second information to the second apparatus on the first time domain resource, the first apparatus may first determine to send the second information to the second apparatus on the first time domain resource.

Through this design, the first apparatus may determine whether to send the second information to the second apparatus on the first time domain resource. For example, the first apparatus may determine, based on a historical transmission status with the second apparatus and/or another apparatus, whether to send the second information to the second apparatus on the first time domain resource. To be specific, the first apparatus determines, based on the historical transmission status, whether to perform the data transmission with the second apparatus on the first time domain resource. For example, after the first apparatus performs data transmission with another apparatus on the first time domain resource, if a remaining time domain resource of the first time domain resource is insufficient, the first apparatus determines not to send the second information to the second apparatus on the first time domain resource. In another example, if a priority of performing the data transmission between the first apparatus and the another apparatus on the first time domain resource is higher than a priority of performing the data transmission between the first apparatus and the second apparatus, the first apparatus determines not to send the second information to the second apparatus on the first time domain resource. Further, when the first apparatus determines not to send the second information to the second apparatus on the first time domain resource, the first time domain resource is not used for the data transmission between the first apparatus and the second apparatus.

In a possible design, the method may further include:

The first apparatus receives a first data packet from the second apparatus on the first time domain resource.

Alternatively, the first apparatus sends a second data packet to the second apparatus on the first time domain resource.

Alternatively, the first apparatus receives a first data packet from the second apparatus on the first time domain resource, and sends a second data packet to the second apparatus on the first time domain resource.

Through this design, the data transmission between the first apparatus and the second apparatus may be one-way data transmission. For example, the second apparatus sends the first data packet to the first apparatus on the first time domain resource, or the first apparatus sends the second data packet to the second apparatus on the first time domain resource. In this case, the start moment K may be a start moment at which initial transmission or retransmission of data starts in the one-way data transmission. Alternatively, the data transmission between the first apparatus and the second apparatus may be two-way data transmission. For example, the second apparatus sends the first data packet to the first apparatus on the first time domain resource, and the first apparatus sends the second data packet to the second apparatus on the first time domain resource. In this case, the start moment K may be a start moment at which initial transmission or retransmission of data starts in the two-way data transmission, or is a start moment at which initial transmission of data starts in one data transmission direction, and is a start moment at which retransmission of data starts in the other data transmission direction.

In a possible design, the second information includes identification information of the second apparatus, or includes identification information of a communication link between the first apparatus and the second apparatus, or includes identification information of the second apparatus and identification information of a communication link between the first apparatus and the second apparatus.

Through this design, when the second information includes only the identification information of the second apparatus, the second information may be used for distinguishing from the data transmission with the another apparatus, to indicate a start moment of data transmission with the second apparatus. When the second information includes only identification information of a communication link with the second apparatus, the second information may be used for distinguishing from data transmission on another communication link (for example, a communication link other than the communication link between the first apparatus and the second apparatus, or a communication link between other apparatuses), to indicate a start moment of one or a series of data transmission on the communication link. When the second information includes the identification information of the second apparatus and the identification information of the communication link with the second apparatus, the second information may be used for distinguishing from data transmission on another communication link and distinguishing from the data transmission with the another apparatus, to indicate a start moment of one or a series of data transmission with the second apparatus. For example, in a multicast, broadcast, or another type of communication link, the first apparatus and a plurality of apparatuses (including the second apparatus) may perform data transmission on a same communication link. It may be determined, by using the identification information of the second apparatus, that the second information indicates to perform the data transmission with the second apparatus through the communication link.

In a possible design, a time domain resource for the second information indicates the start moment K.

Through this design, that the second information indicates the start moment K may be: The time domain resource for the second information indicates the start moment K. Optionally, the second information may be a trigger signal used for triggering the data transmission between the first apparatus and the second apparatus. Alternatively, the second information may include data on which channel coding and/or modulation has been performed. The data herein includes service data and/or control information. In this case, the data corresponding to the data transmission may include or not include data in the second information.

In a possible design, that the time domain resource for the second information indicates the start moment K may be:
a sending moment of the second information is equal to the start moment K;
a sending completion moment of the second information is equal to the start moment K;
there is a first interval between a sending moment of the second information and the start moment K; or
there is a first interval between a sending completion moment of the second information and the start moment K, where
the first interval is predefined or configured.

Through this design, the sending moment of the second information may be equal to the start moment K. For example, the first apparatus is used as a sending node, and sends the second data packet and the second information to the second apparatus together. Alternatively, the sending completion moment of the second information is equal to the start moment K. For example, the first apparatus is used as a sending node, and sequentially sends the second information and the second data packet to the second apparatus. Alternatively, there is the first interval between the sending moment of the second information and the start moment K. For example, the second apparatus is used as a sending node, and there is the first interval between the sending moment of the second information and a moment at which the second apparatus starts to send the first data packet to the first apparatus. Alternatively, there is the first interval between the sending completion moment of the second information and the start moment K. For example, the second apparatus is used as a sending node, and there is the first interval between the sending completion moment of the second information and a moment at which the second apparatus starts to send the first data packet to the first apparatus.

Optionally, that the first interval is predefined or preconfigured may be: The first interval is an interval selected by the sending node (for example, the first apparatus or the second apparatus) from a predefined or preconfigured interval set or range. Correspondingly, a receiving node may detect a data packet from the sending node based on the predefined or preconfigured interval set or range.

In a possible design, the first time domain resource includes N time domain resource units, and N is a positive integer greater than 0; and the second information indicates a time domain resource unit to which the start moment K belongs, and the time domain resource unit to which the start moment K belongs is an M* time domain resource unit in the N time domain resource units.

Through this design, the first apparatus may configure, by using a time domain resource unit as a granularity, a time domain resource used for the data transmission with the second apparatus. The N time domain resource units may be counted from 1, for example, denoted as time domain resource units 1 to N, or may be counted from 0, for example, denoted as time domain resource units 0 to N-1. The first time domain resource unit in the N time domain resource units may be the frontmost time domain resource unit in the N time domain resource units in time domain.

In a possible design, the start moment K may be a start moment or an end moment of the M^{th} time domain resource unit.

In a possible design, that the first apparatus sends the second information to the second apparatus on the first time domain resource may be: The first apparatus starts to send the second information from an L^{th} time domain resource unit in the N time domain resource units, where L is a positive integer greater than 0 and less than or equal to M.

Through this design, the first apparatus may send the second information to the second apparatus in advance, or may send the second information on the M^{th} time domain resource unit. In other words, the sending moment of the second information and the start moment K may belong to a same time domain resource unit.

In a possible design, that the first apparatus starts to send the second information from an L^{th} time domain resource unit in the N time domain resource units may be: The first apparatus starts to send the second information from a start moment of the L^{th} time domain resource unit.

Through this design, the sending moment of the second information may be the start moment of the L^{th} time domain resource unit.

In a possible design, the method may further include: The first apparatus sends third information, where the third information indicates a configuration of the time domain resource unit.

Through this design, the time domain resource unit may be configured through the third information sent by the first apparatus.

In a possible design, the method may further include: The first apparatus sends fourth information to a third apparatus on a second time domain resource, where the fourth information indicates a start moment H of data transmission between the first apparatus and the third apparatus, a time domain resource used for the data transmission between the first apparatus and the third apparatus belongs to the second time domain resource, the second time domain resource is continuous in time domain, there is an overlapping part between the second time domain resource and the first time domain resource, and the start moment H belongs to the overlapping part between the second time domain resource and the first time domain resource.

Through this design, because the first apparatus flexibly determines when the data transmission between the first apparatus and the second apparatus starts, when the first data packet and/or the second data packet are/is correctly received, or sending of the first data packet and/or the second data packet is stopped, and there is still a remaining first time domain resource, the first apparatus may indicate a moment in the remaining time domain resource as a start moment of the data transmission with the another apparatus. In other words, the first apparatus may configure, through this design, the remaining time domain resource from the data transmission between the first apparatus and the second apparatus for the data transmission with the another apparatus. In this way, a waste of the remaining time domain resource can be avoided, and time domain resource utilization can be improved.

In a possible design, there may be an overlapping part between the first time domain resource and a third time domain resource, and a start moment of the first time domain resource is later than a start moment of the third time domain resource. The third time domain resource is continuous in time domain. A time domain resource used for data transmission between the first apparatus and a fourth apparatus belongs to the third time domain resource, and the start moment K may belong to the overlapping part between the third time domain resource and the first time domain resource.

Through this design, because the first apparatus flexibly determines when the data transmission between the first apparatus and the second apparatus starts, after the data transmission between the first apparatus and the fourth apparatus on the third time domain resource ends, and there is still a remaining third time domain resource, the first apparatus may indicate a moment in the remaining time domain resource as a start moment of the data transmission with the second apparatus. In other words, the first apparatus may configure the remaining time domain resource from the data transmission between the first apparatus and the another apparatus for the data transmission with the second apparatus. In this way, a waste of the remaining time domain resource can be avoided, and time domain resource utilization can be improved.

According to a second aspect, an embodiment of this application provides a communication method. The method may be performed by a second apparatus, or may be performed by a component (for example, a chip or a chip system) or the like of the second apparatus. For example, the second apparatus may be an in-vehicle apparatus, or may be a non-in-vehicle apparatus. Optionally, the second apparatus is, for example, a device with a communication function such as a smart wearable device, a smart home device, a smart manufacturing device, or an intelligent transportation device, for example, a headset, a mobile phone, a vehicle, or an unmanned aerial vehicle. In the method, the second apparatus receives first information from a first apparatus, where the first information indicates at least one time domain resource, and each time domain resource is continuous in time domain; and receives second information from the first apparatus on a first time domain resource, where the second information indicates a start moment K of data transmission between the second apparatus and the first apparatus, a time domain resource used for the data transmission between the second apparatus and the first apparatus belongs to the first time domain resource, and the first time domain resource is one of the at least one time domain resource.

In a possible design, the method may further include:

The second apparatus receives a second data packet from the first apparatus on the first time domain resource.

Alternatively, the second apparatus sends a first data packet to the first apparatus on the first time domain resource.

Alternatively, the second apparatus receives a second data packet from the first apparatus on the first time domain resource, and sends a first data packet to the first apparatus on the first time domain resource.

In a possible design, the second information includes identification information of the second apparatus, or includes identification information of a communication link between the first apparatus and the second apparatus, or includes identification information of the second apparatus and identification information of a communication link between the first apparatus and the second apparatus.

In a possible design, a time domain resource for the second information indicates the start moment K.

In a possible design, that the time domain resource for the second information indicates the start moment K may be:
a moment at which the second information is received is equal to the start moment K;
a receiving completion moment of the second information is equal to the start moment K;
there is a first interval between a moment at which the second information is received and the start moment K; or
there is a first interval between a receiving completion moment of the second information and the start moment K, where
the first interval is predefined or configured.

In a possible design, the first time domain resource includes N time domain resource units, and N is a positive integer greater than 0; and the second information indicates a time domain resource unit to which the start moment K belongs, and the time domain resource unit to which the start moment K belongs is an M* time domain resource unit in the N time domain resource units.

In a possible design, the start moment K is a start moment or an end moment of the M^{th} time domain resource unit.

In a possible design, that the second apparatus receives second information from the first apparatus on a first time domain resource may be: The second apparatus starts to receive the second information from the first apparatus from an L^{th} time domain resource unit in the N time domain resource units, where L is a positive integer greater than 0 and less than or equal to M.

In a possible design, that the second apparatus starts to receive the second information from the first apparatus from an L^{th} time domain resource unit in the N time domain resource units may be: The second apparatus starts to receive the second information from a start moment of the L^{th} time domain resource unit.

In a possible design, the method may further include: The second apparatus starts to detect the second information from a start moment of each time domain resource unit in the N time domain resource units.

Through this design, the second apparatus may blindly detect the second information only at the start moment of each time domain resource unit, and does not need to perform blind detection in an entire time domain resource. Therefore, a quantity of blind detections of the second apparatus can be reduced, implementation complexity of the second apparatus can be reduced, and power consumption of the second apparatus can be further reduced.

In a possible design, the method may further include: The second apparatus receives third information from the first apparatus, where the third information indicates a configuration of the time domain resource unit.

According to a third aspect, an embodiment of this application provides a resource indication apparatus. The apparatus may include a processing unit, a sending unit, and a receiving unit. The units may perform corresponding functions performed by the first apparatus in any design example of the first aspect. The resource indication apparatus may be the first apparatus or a functional unit, a chip, an integrated circuit, or the like in the first apparatus.

For example, the sending unit is configured to: send first information, where the first information indicates at least one time domain resource, and each time domain resource is continuous in time domain; and send second information to a second apparatus on a first time domain resource, where the second information indicates a start moment K of data transmission between the resource indication apparatus and the second apparatus, a time domain resource used for the data transmission between the resource indication apparatus and the second apparatus belongs to the first time domain resource, and the first time domain resource is one of the at least one time domain resource.

In a possible design, before the resource indication apparatus sends the second information to the second apparatus on the first time domain resource, the processing unit is configured to determine to send the second information to the second apparatus on the first time domain resource.

In a possible design, the receiving unit is configured to receive a first data packet from the second apparatus on the first time domain resource.

Alternatively, the sending unit is configured to send a second data packet to the second apparatus on the first time domain resource.

Alternatively, the sending unit is configured to send a second data packet to the second apparatus on the first time domain resource, and the receiving unit is configured to receive a first data packet from the second apparatus on the first time domain resource.

In a possible design, the second information includes identification information of the second apparatus, or includes identification information of a communication link between the resource indication apparatus and the second apparatus, or includes identification information of the second apparatus and identification information of a communication link between the resource indication apparatus and the second apparatus.

In a possible design, a time domain resource for the second information indicates the start moment K.

In a possible design, that the time domain resource for the second information indicates the start moment K may be:
a sending moment of the second information is equal to the start moment K;
a sending completion moment of the second information is equal to the start moment K;
there is a first interval between a sending moment of the second information and the start moment K; or
there is a first interval between a sending completion moment of the second information and the start moment K, where
the first interval is predefined or configured.

In a possible design, the first time domain resource includes N time domain resource units, and N is a positive integer greater than 0; and the second information indicates a time domain resource unit to which the start moment K belongs, and the time domain resource unit to which the start moment K belongs is an M* time domain resource unit in the N time domain resource units.

In a possible design, the start moment K is a start moment or an end moment of the M^{th} time domain resource unit.

In a possible design, the sending unit is specifically configured to start to send the second information from an L^{th} time domain resource unit in the N time domain resource units, where L is a positive integer greater than 0 and less than or equal to M.

In a possible design, the sending unit is specifically configured to start to send the second information from a start moment of the L^{th} time domain resource unit.

In a possible design, the sending unit is further configured to send third information, where the third information indicates a configuration of the time domain resource unit.

In a possible design, when the data transmission between the resource indication apparatus and the second apparatus on the first time domain resource ends and there is a remaining first time domain resource, the sending unit is further configured to send fourth information to a third apparatus on a second time domain resource, where the fourth information indicates a start moment H of data transmission between the resource indication apparatus and the third apparatus, a time domain resource used for the data transmission between the resource indication apparatus and the third apparatus belongs to the second time domain resource, the second time domain resource is continuous in time domain, there is an overlapping part between the second time domain resource and the first time domain resource, and a sending moment of the fourth information belongs to the overlapping part between the second time domain resource and the first time domain resource. Further, the start moment H may alternatively belong to the overlapping part between the second time domain resource and the first time domain resource.

In a possible design, there may be an overlapping part between the first time domain resource and a third time domain resource, and a start moment of the first time domain resource is later than a start moment of the third time domain resource. The third time domain resource is continuous in time domain, and a time domain resource used for data transmission between the resource indication apparatus and a fourth apparatus belongs to the third time domain resource; and after the data transmission between the resource indication apparatus and the fourth apparatus on the third time domain resource ends, and there is still a remaining third time domain resource, the sending moment of the second information may belong to the overlapping part between the first time domain resource and the third time domain resource. Further, the start moment K may alternatively belong to the overlapping part between the third time domain resource and the first time domain resource.

According to a fourth aspect, an embodiment of this application provides a communication apparatus. The apparatus may include a processing unit, a sending unit, and a receiving unit. The units may perform corresponding functions performed by the second apparatus in any design example of the second aspect. The communication apparatus may be the second apparatus or a functional unit, a chip, an integrated circuit, or the like in the second apparatus.

The receiving unit is configured to: receive first information from a first apparatus, where the first information indicates at least one time domain resource, and each time domain resource is continuous in time domain; and receive second information from the first apparatus on a first time domain resource, where the second information indicates a start moment K of data transmission between the communication apparatus and the first apparatus, a time domain resource used for the data transmission between the communication apparatus and the first apparatus belongs to the first time domain resource, and the first time domain resource is one of the at least one time domain resource.

In a possible design, the receiving unit is further configured to receive a second data packet from the first apparatus on the first time domain resource.

Alternatively, the sending unit is further configured to send a first data packet to the first apparatus on the first time domain resource.

Alternatively, the sending unit is further configured to send a first data packet to the first apparatus on the first time domain resource, and the receiving unit is further configured to receive a second data packet from the first apparatus on the first time domain resource.

In a possible design, the second information includes identification information of the communication apparatus, or includes identification information of a communication link between the first apparatus and the communication apparatus, or includes identification information of the communication apparatus and identification information of a communication link between the first apparatus and the communication apparatus.

In a possible design, a time domain resource for the second information indicates the start moment K.

In a possible design, that the time domain resource for the second information indicates the start moment K may be:
a moment at which the second information is received is equal to the start moment K;
a receiving completion moment of the second information is equal to the start moment K;
there is a first interval between a moment at which the second information is received and the start moment K; or
there is a first interval between a receiving completion moment of the second information and the start moment K, where
the first interval is predefined or configured.

In a possible design, the first time domain resource includes N time domain resource units, and N is a positive integer greater than 0; and the second information indicates a time domain resource unit to which the start moment K belongs, and the time domain resource unit to which the start moment K belongs is an M* time domain resource unit in the N time domain resource units.

In a possible design, the start moment K is a start moment or an end moment of the M^{th} time domain resource unit.

In a possible design, the receiving unit is specifically configured to start to receive the second information from the first apparatus from an L^{th} time domain resource unit in the N time domain resource units, where L is a positive integer greater than 0 and less than or equal to M.

In a possible design, the receiving unit is specifically configured to start to receive the second information from a start moment of the L^{th} time domain resource unit.

In a possible design, the processing unit is configured to start to detect the second information from a start moment of each time domain resource unit in the N time domain resource units.

In a possible design, the receiving unit is further configured to receive third information from the first apparatus, where the third information indicates a configuration of the time domain resource unit.

According to a fifth aspect, this application provides a resource indication apparatus. The resource indication apparatus may be a first apparatus, or may be an apparatus in the first apparatus. The resource indication apparatus may include one or more processors, configured to implement the method performed by the first apparatus in the first aspect. The resource indication apparatus may further include a memory, configured to store program instructions and data. The memory is coupled to the one or more processors, and the one or more processors may invoke and execute the program instructions stored in the memory, to implement any method performed by the first apparatus in the first aspect.

Optionally, the resource indication apparatus may further include a transceiver, and the transceiver is used by the resource indication apparatus to communicate with another device.

According to a sixth aspect, this application provides a communication apparatus. The communication apparatus may be a second apparatus, or may be an apparatus in the second apparatus. The communication apparatus may include one or more processors, configured to implement the method performed by the second apparatus in the second aspect. The communication apparatus may further include a memory, configured to store program instructions and data. The memory is coupled to the one or more processors, and the one or more processors may invoke and execute the program instructions stored in the memory, to implement any method performed by the second apparatus in the second aspect.

Optionally, the communication apparatus may further include a transceiver, and the transceiver is used by the communication apparatus to communicate with another device.

According to a seventh aspect, this application provides a computer-readable storage medium. The storage medium stores a computer program or instructions. When the computer program or the instructions are executed, the method performed by the first apparatus in any design example of the first aspect may be implemented.

According to an eighth aspect, this application provides a computer-readable storage medium. The storage medium stores a computer program or instructions. When the computer program or the instructions are executed, the method performed by the second apparatus in any design example of the second aspect may be implemented.

According to a ninth aspect, this application provides a computer program product, including instructions. When the instructions run on a computer, the computer is enabled to perform the method performed by the first apparatus in any design example of the first aspect.

According to a tenth aspect, this application provides a computer program product, including instructions. When the instructions run on a computer, the computer is enabled to perform the method performed by the second apparatus in any design example of the second aspect.

According to an eleventh aspect, this application further provides a chip system. The chip system includes at least one processor and an interface circuit. The processor is configured to exchange instructions and/or data through the interface circuit, to enable an apparatus in which the chip system is located to implement the method performed by the first apparatus in any design example of the foregoing aspect. The chip system may include a chip, or may include a chip and another discrete device.

According to a twelfth aspect, this application further provides a chip system. The chip system includes at least one processor and an interface circuit. The processor is configured to exchange instructions and/or data through the interface circuit, to enable an apparatus in which the chip system is located to implement the method performed by the second apparatus in any design example of the second aspect. The chip system may include a chip, or may include a chip and another discrete device.

According to a thirteenth aspect, this application further provides a communication system. The communication system includes the resource indication apparatus in any design example of the fifth aspect and the communication apparatus in any design example of the sixth aspect.

According to a fourteenth aspect, this application further provides a terminal device. The terminal device includes the resource indication apparatus in any design example of the fifth aspect and/or the communication apparatus in any design example of the sixth aspect, or includes the chip system in any design example of the eleventh aspect and/or the chip system in any design example of the twelfth aspect. The chip systems in the eleventh aspect and the twelfth aspect may be a same set of chip systems or different chip systems.

For beneficial effects of the second aspect to the fourteenth aspect and the implementations thereof, refer to the descriptions of the beneficial effects of the first aspect and the implementations thereof.

### BRIEF DESCRIPTION OF DRAWINGS

FIG. 1A is a schematic diagram of an application scenario according to an embodiment of this application;
FIG. 1B is a schematic diagram of another application scenario according to an embodiment of this application;
FIG. 1C is a schematic diagram of still another application scenario according to an embodiment of this application;
FIG. 2 is a schematic flowchart of data transmission between a master node and a slave node according to an embodiment of this application;
FIG. 3 is a schematic diagram of a time domain resource allocated by a master node to a slave node according to an embodiment of this application;
FIG. 4 is a schematic flowchart of a resource indication method according to an embodiment of this application;
FIG. 5A is a schematic diagram of a start moment K according to an embodiment of this application;
FIG. 5B is a schematic diagram of a start moment K according to an embodiment of this application;
FIG. 5C is another schematic diagram of a start moment K according to an embodiment of this application;
FIG. 5D is another schematic diagram of a start moment K according to an embodiment of this application;
FIG. 6A is still another schematic diagram of a start moment K according to an embodiment of this application;
FIG. 6B is still another schematic diagram of a start moment K according to an embodiment of this application;
FIG. 7 is a schematic diagram of data transmission according to an embodiment of this application;
FIG. 8A is a schematic diagram of one-way data transmission according to an embodiment of this application;
FIG. 8B is another schematic diagram of one-way data transmission according to an embodiment of this application;
FIG. 9 is a schematic diagram of two-way data transmission according to an embodiment of this application;
FIG. 10 is another schematic diagram of two-way data transmission according to an embodiment of this application;
FIG. 11 is still another schematic diagram of two-way data transmission according to an embodiment of this application;
FIG. 12 is a schematic flowchart of a resource indication method according to an embodiment of this application;
FIG. 13 is a schematic diagram of a time domain resource 3 and a time domain resource 4 according to an embodiment of this application;
FIG. 14 is a schematic flowchart of another resource indication method according to an embodiment of this application;
FIG. 15 is a schematic diagram of a time domain resource 3 and a time domain resource 5 according to an embodiment of this application;
FIG. 16 is a schematic diagram of a structure of a resource indication apparatus according to an embodiment of this application;
FIG. 17 is a schematic diagram of a structure of a communication apparatus according to an embodiment of this application;
FIG. 18 is a schematic diagram of a structure of a communication apparatus according to an embodiment of this application; and
FIG. 19 is a schematic diagram of a structure of a communication apparatus according to an embodiment of this application.

### DESCRIPTION OF EMBODIMENTS

The following first describes some terms in embodiments of this application, to help a person skilled in the art have a better understanding.
(1) Master nodes and slave nodes are two types of nodes that are classified based on logical functions. A master node manages a slave node, has a resource allocation function, and is responsible for allocating resources to the slave node. The slave node performs communication based on scheduling of the master node and by using the resources allocated by the master node. The nodes may be various apparatuses. For example, the master node is a mobile phone, and the slave node is a headset. The mobile phone establishes a communication connection to the headset to implement data exchange. The mobile phone manages the headset. The mobile phone has a resource allocation function, and may allocate resources to the headset.

It should be noted that data transmission in embodiments of this application may be data transmission between the master node and the slave node, or may be data transmission between slave nodes that is implemented by scheduling a resource by the master node. This is not limited in embodiments of this application.

(2) A time domain resource unit may be a time unit such as a super frame, a frame (or referred to as a radio frame), a subframe, a slot, an event, or a sub-event, or may be a unit group constructed by a plurality of continuous time units, or the like. For example, the time domain resource unit may be predefined in a protocol, or may be configured by sending a message to the slave node by the master node, may be pre-agreed on by the master node and the slave node, or the like. Specifically, the super frame is used by a coordinator to limit an access time of the device to each channel. In an optional design, the super frame may divide a communication time into two time periods: an active period and an inactive period. In the inactive period, the coordinator enters a low power consumption mode or a sleep mode. Alternatively, the super frame may include a plurality of radio frames, for example, 48 radio frames. Duration of each radio frame is approximately 20.83 microseconds (µs). Each frame may include S symbols, and S is a positive integer. For example, S may be 7 or 8. A specific length or granularity of the time domain resource unit may be set or defined according to a system design requirement.

(4) A cockpit domain controller (cockpit domain controller or control domain cockpit, CDC) is briefly referred to as an in-vehicle infotainment. In addition to conventional radio, music video playback, and navigation functions, the current in-vehicle infotainment has cellular communication functions (3G, 4G, and the like), and can implement information communication between a human and a vehicle and between the vehicle and an outside world by using a controller area network (controller area network, CAN) bus (BUS) technology of the vehicle. This enhances user experience and service-related and safety-related functions.

(5) A communication domain is a system including a group of communication nodes having communication relationships and communication connection relationships between the communication nodes. One apparatus or device may be in a plurality of communication domains. For example, when a mobile phone performs wireless communication with a headset, the mobile phone is in a communication domain a including the mobile phone and the headset. In the communication domain a, the mobile phone is a master node, and the headset is a slave node. Then, after the mobile phone detects a CDC and establishes a wireless connection to the CDC, the mobile phone is also in a communication domain b including the mobile phone and the CDC. In the communication domain b, the CDC is a master node, the mobile phone is a slave node, and the mobile phone follows scheduling of the CDC. The communication domain b may further include another slave node, such as an in-vehicle speaker, a microphone, or the like.

(6) A network device may also be referred to as a radio access network device, and may be a base station (base station), an eNodeB, a transmission reception point (transmission reception point, TRP), a gNB, a next-generation base station in a sixth generation (6^{th} generation, 6G) mobile communication system, a base station in a future mobile communication system, an access node in a Wi-Fi system, or the like; or may be a module or a unit that completes some functions of a base station, for example, may be a central unit (central unit, CU), or may be a distributed unit (distributed unit, DU). The radio access network device may be a macro base station, or may be a micro base station, an indoor base station, or the like. The radio access network device may be a Bluetooth (Bluetooth, BT) gateway, a Bluetooth low energy (Bluetooth low energy, BLE) gateway, a BT/BLE dual-mode gateway or a multimode gateway, or a gateway compatible with the foregoing Bluetooth related technology, or another possible short-range communication gateway. A specific technology and a specific device form that are used by the network device are not limited in embodiments of this application.

(7) A terminal device may also be referred to as a terminal, user equipment (user equipment, UE), a mobile station, a mobile terminal, or the like. The terminal may be widely applied to various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, self-driving, remote medicine, a smart grid, smart furniture, smart office, smart wearables, smart transportation, and smart city. The terminal may be a mobile phone, a tablet computer, a computer with a wireless transceiver function, a wearable device, a vehicle, an unmanned aerial vehicle, a helicopter, an airplane, a ship, a robot, a robotic arm, a smart home device, or the like. The terminal may be a short-range communication device that supports BT or BLE, or is compatible with both BT and BLE technologies, or supports other possible short-range communication technologies. Embodiments of this application do not limit a specific technology and a specific apparatus form used for the terminal.

(8) The terms "system" and "network" may be interchangeably used in embodiments of this application. "At least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may indicate: a, b, c, a and b, a and c, b and c, or a, b, and c, where a, b, and c may be singular or plural.

In addition, unless otherwise specified, ordinal numerals such as "first", "second", and "third" mentioned in embodiments of this application are used to distinguish between a plurality of objects, and are not used to limit sizes, content, a sequence, a time sequence, priorities, importance degrees, or the like of the plurality of objects. For example, first information, second information, and third information are merely used for distinguishing between different information, but do not indicate different sizes, content, sending sequences, priorities, importance, or the like of the three pieces of information. In addition, the terms "include", "comprise" and any other variants are intended to cover a non-exclusive inclusion. For example, a process, method, system, product or device that includes a series of steps or units not only includes those steps or units specified expressly, but also includes other steps or units that are not specified expressly or are inherent to the process, method, product or device.

The foregoing describes some noun concepts used in embodiments of this application. The following describes an application scenario to which embodiments of this application are applicable.

A wireless communication scenario to which technical solutions provided in embodiments of this application are applied may include wide-area wireless communication, for example, communication between a plurality of base stations and a plurality of terminal devices. The base stations may be used as master nodes, and the terminal devices may be used as slave nodes. For example, a base station used as a master node may allocate a resource to a terminal device, and the terminal device follows scheduling of the base station. The wireless communication scenario to which the technical solutions provided in embodiments of this application are applied may further include a short-range wireless communication scenario, for example, communication between a CDC and each of an in-vehicle speaker, an in-vehicle microphone, or a mobile phone, or communication between a mobile phone and a wearable device such as a headset. The wireless communication scenario to which the technical solutions provided in embodiments of this application are applied may further include local area wireless communication, for example, communication between a plurality of access points (access point, AP) and a plurality of stations (station).

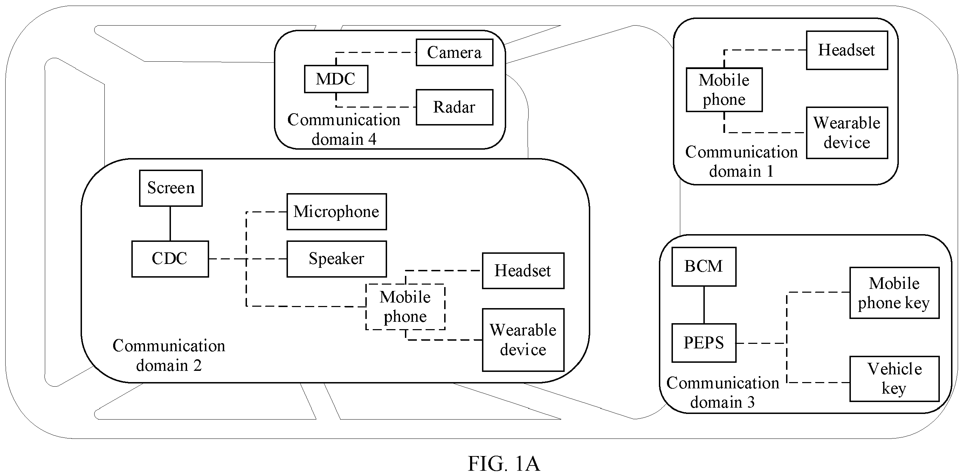

For example, if the technical solutions provided in embodiments of this application are applied to an in-vehicle wireless communication scenario, a network architecture shown in FIG. 1A may be a network architecture to which embodiments of this application are applied. If the technical solutions provided in embodiments of this application are applied to another wide-area wireless communication or local-area wireless communication scenario, the network architecture to which embodiments of this application are applied may correspondingly change.

As shown in FIG. 1A, there are a plurality of communication domains in a vehicle. One communication domain includes one master node and at least one slave node. The master node schedules the slave node, and configures a resource for the slave node, to implement transmission of service data between the master node and the slave node. For example, in FIG. 1A, a mobile phone, a headset, and a wearable device belong to a communication domain, for example, referred to as a communication domain 1. The mobile phone is a master node, and the headset and the wearable device are slave nodes. A CDC, a display, a microphone, and a speaker belong to a communication domain, for example, referred to as a communication domain 2. The CDC is a master node, and the display, the microphone, and the speaker are slave nodes. A passive entry passive start (passive entry passive start, PEPS), a body control module (body control module, BCM), a mobile phone key, and a vehicle key belong to a communication domain, for example, referred to as a communication domain 3. The PEPS is a master node, and the BCM, the mobile phone key, and the vehicle key are slave nodes. An MDC, a camera, and a radar belong to a communication domain, for example, referred to as a communication domain 4. The MDC is a master node, and the camera and the radar are slave nodes. In addition, a master node in a communication domain may also be used as a slave node in another communication domain. For example, the mobile phone in the communication domain 1 may be used as a slave node in the communication domain 2.

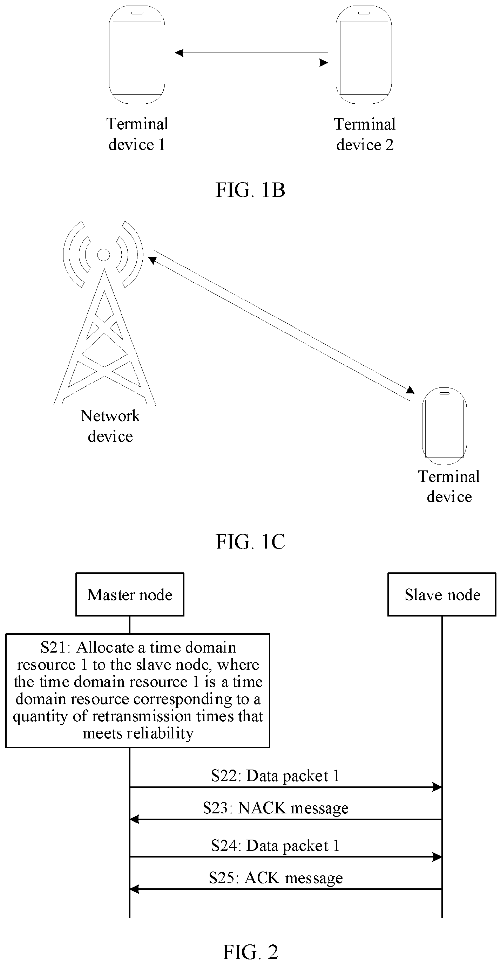

In another example, the technical solutions provided in embodiments of this application are applied to a V2X communication scenario. FIG. 1B shows an application scenario according to an embodiment of this application. FIG. 1B includes a terminal device 1 and a terminal device 2. The terminal device 1 and the terminal device 2 may communicate with each other through a sidelink (sidelink, SL). For example, the terminal device 1 may be used as a master node, and the terminal device 2 may be used as a slave node.

In still another example, the technical solutions provided in embodiments of this application are applied to Uu interface communication in an LTE system or an NR system. FIG. 1C shows an application scenario according to an embodiment of this application. FIG. 1C includes a network device and a terminal device. The network device and the terminal device may communicate with each other through a Uu interface.

In FIG. 1B and FIG. 1C, for example, the terminal device is a mobile phone. The terminal device in embodiments of this application is not limited thereto.

The following describes technical features in embodiments of this application.

With continuous development of global communication technologies, development speed and application of wireless communication technologies have surpassed those of fixed communication technologies, presenting a development trend in full swing. Intelligent terminals such as an intelligent transportation device, a smart home device, and a robot are gradually entering people's daily life. The following uses the intelligent transportation device, one of the intelligent terminals, as an example. Development and application of an internet of vehicles technology attract more and more attention. Compared with the conventional wired communication, in-vehicle wireless communication can further reduce a quantity, length, and weight of internal wiring harnesses of a vehicle, and corresponding installation, and maintenance costs. Therefore, the in-vehicle communication technology is gradually becoming wireless. Diversification of in-vehicle applications leads to an increasing quantity and types of in-vehicle communication nodes, and imposes a higher requirement on an in-vehicle communication capability. In a wireless communication scenario in which an intelligent terminal is located, there are usually a plurality of communication domains, for example, a communication domain 1, a communication domain 2, a communication domain 3, or a communication domain 4 in FIG. 1A, in a specific communication area or range.

The communication domain includes one master node and at least one slave node. The master node schedules the slave node and configures a resource for the slave node, to implement transmission of service data between the master node and the slave node or between slave nodes. For example, a communication system of the master node and the slave node is compatible with a BT technology, a BLE technology, another possible short-range communication technology, or the like. The BLE technology is used as an example. The BLE technology aims to reduce power consumption and costs while maintaining the same communication range. In the BLE technology, the slave node sends a broadcast message on a broadcast channel (that is, a broadcast frequency), and the master node scans the broadcast channel to implement mutual discovery or connection establishment between the nodes. Currently, the BT technology or a BLE technology supports only data transmission based on a single hybrid automatic repeat request (hybrid automatic repeat request, HARQ) wait-stop protocol. To be specific, after sending a data packet to a receiving node, a sending node stops to wait for an acknowledgment (acknowledgement, ACK) message or a negative acknowledgment (negative acknowledgement, NACK) message from the receiving node. For a process of data transmission between the master node and the slave node, refer to FIG. 2.

S21: The master node allocates a time domain resource 1 to the slave node, where the time domain resource 1 is a time domain resource corresponding to a quantity of transmission times that meets reliability. For example, the master node allocates, to the slave node, the time domain resource 1 used for data transmission, where the time domain resource 1 is a time domain resource corresponding to a quantity of transmission times that is greater than or equal to a quantity of transmission times that meets reliability. For example, 0.5 ms is required for a single transmission time, and a quantity of transmission times that meets reliability is 3. The master node needs to allocate a time domain resource greater than or equal to 1.5 ms for the data transmission between the master node and the slave node.

Further, the master node may further send indication information to the slave node, to indicate the time domain resource 1.

S22: The master node sends a data packet 1 to the slave node at a moment t1 in the time domain resource 1.

S23: The slave node sends a NACK message to the master node at a moment t2 in the time domain resource 1. The slave node does not correctly receive the data packet 1, and the slave node sends the NACK message to the master node at the moment t2. For example, the slave node fails to receive the data packet 1, or fails to decode the data packet 1, or transmission duration of the data packet 1 exceeds specified duration.

S24: The master node sends the data packet 1 to the slave node at a moment t3 in the time domain resource 1. After receiving the NACK message from the slave node, the master node retransmits the data packet 1 at the moment t3.

S25: The slave node sends an ACK message to the master node at a moment t4 in the time domain resource 1. After the slave node correctly receives the data packet 1, the slave node sends the ACK message to the master node at the moment t4.

In this way, transmission of the data packet 1 is completed between the master node and the slave node.

The master node may allocate, to the slave node, a time domain resource corresponding to a quantity of transmission times that meets reliability. The master node avoids a resource conflict by generally keeping time domain resources allocated to different communication links from overlapping in time domain. In this case, in a process of data transmission, each node starts to perform data transmission at a start moment of a time domain resource allocated to the node, and as a result, resource use flexibility is reduced.

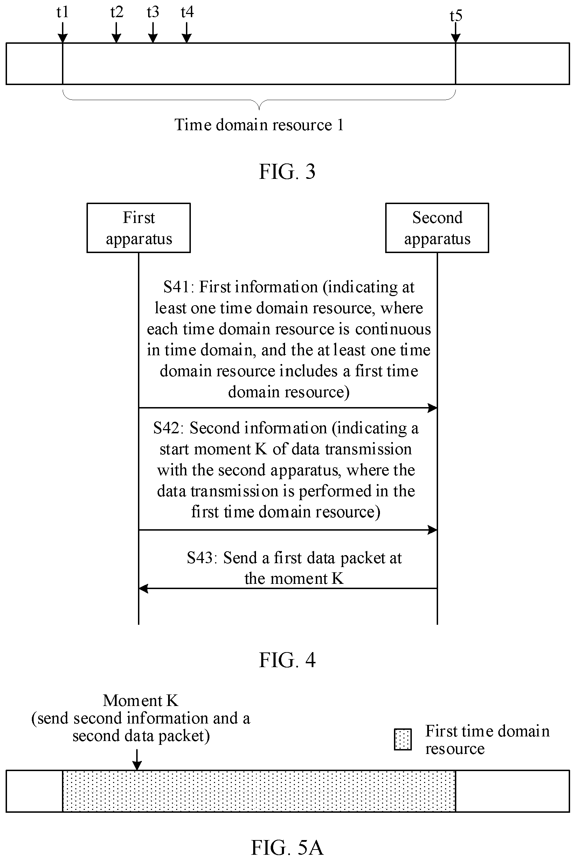

In addition, a quantity of transmission times actually used by the receiving node to correctly receive data is usually less than a quantity of transmission times required to ensure reliability. For example, a packet error rate of a single transmission time is 10%. To ensure reliability of 99.9%, three times of transmission are required. However, in a single transmission time, there is a 90% probability that the receiving node correctly receives the data. In other words, in an actual process of data transmission, there is a 99% probability that the receiving node correctly receives the data when a quantity of times of data transmission does not exceed 2. In other words, the allocated time domain resources are usually greater than the time domain resources actually used for data transmission. As shown in FIG. 3, the master node allocates time domain resources corresponding to the moment t1 to a moment t5 to the slave node, that is, the time domain resource 1 is the moment t1 to the moment t5. According to a procedure shown in FIG. 2, the data packet 1 is correctly received by the slave node at the moment t4, and therefore, time domain resources corresponding to the moment t4 and the moment t5 are unused time domain resources. Because time domain resources allocated by the master node to different slave nodes do not overlap in time domain, a remaining part of the time domain resource 1 is wasted, and utilization of the time domain resources is reduced.

In view of this, embodiments of this application provide a resource indication method, an apparatus, and a system. In embodiments of this application, a first apparatus may configure at least one time domain resource for a second apparatus, and then send second information to the second apparatus to indicate a start moment K for performing data transmission with the second apparatus. The data transmission is performed in a first time domain resource. The first time domain resource is one of the at least one time domain resource. In other words, when the data transmission between the first apparatus and the second apparatus starts is determined by the second information sent by the first apparatus. This means that through the method provided in embodiments of this application, the first apparatus may further indicate a start moment of data transmission between two other apparatuses (for example, the first apparatus and another apparatus other than the second apparatus, or the second apparatus and another apparatus other than the first apparatus, or two other apparatuses other than the first apparatus and the second apparatus). In this way, a resource conflict can be avoided, and resource use flexibility can be improved.

In addition, because the first apparatus may further indicate a start moment of data transmission between the other two apparatuses, it means that based on the method provided in embodiments of this application, when there is a remaining first time domain resource, the first apparatus may indicate a moment in the remaining time domain resource as a start moment of data transmission with another apparatus. In other words, the first apparatus may configure the remaining time domain resource for data transmission with the another apparatus. In this way, a waste of time domain resources can be avoided, and time domain resource utilization can be improved.

FIG. 4 is a schematic flowchart of a resource indication method according to an embodiment of this application. In the following description process, an example in which the method is applied to the network architecture shown in any one of FIG. 1A to FIG. 1C is used.

For ease of description, an example in which the method is performed by a first apparatus and a second apparatus is used in the following description. In a possible scenario, if this embodiment is applied to the network architecture shown in FIG. 1A, the second apparatus described below may be any slave node in any communication domain shown in FIG. 1A, for example, the headset in the communication domain 1, the microphone in the communication domain 2, or the radar in the communication domain 4. Alternatively, the second apparatus may be a chip system disposed in any slave node in any communication domain shown in FIG. 1A. The first apparatus described below may be any master node in any communication domain shown in FIG. 1A, for example, a mobile phone in the communication domain 1, the CDC in the communication domain 2, or the MDC in the communication domain 4, or the first apparatus may be a chip system disposed in any master node in any communication domain shown in FIG. 1A. Alternatively, if this embodiment is applied to the network architecture shown in FIG. 1B, the first apparatus described below may be the terminal device 1 shown in FIG. 1B, and the second apparatus described below may be the terminal device 2 shown in FIG. 1B. Alternatively, if this embodiment is applied to the network architecture shown in FIG. 1C, the first apparatus described below may be the network device shown in FIG. 1C, and the second apparatus described below may be the terminal device shown in FIG. 1C.

S41: The first apparatus sends first information to the second apparatus. Correspondingly, the second apparatus receives the first information from the first apparatus.

The first information may indicate at least one time domain resource, and each time domain resource in the at least one time domain resource is continuous in time domain. When the first information indicates a plurality of time domain resources, the plurality of time domain resources may be periodic, or may be aperiodic. This is not limited in embodiments of this application. For example, data transmission between the first apparatus and the second apparatus is a periodic service, and the first apparatus may allocate a plurality of periodic time domain resources to the second apparatus, for example, allocate one time domain resource in each service transmission period. The time domain resource is continuous in the service transmission period. In another example, the data transmission between the first apparatus and the second apparatus is a periodic service, and the first apparatus may allocate a plurality of aperiodic time domain resources to the second apparatus. For example, quantities of time domain resources allocated in each service transmission period are different, but each time domain resource is continuous in time domain.

It should be noted that, regardless of whether the plurality of time domain resources are periodic or aperiodic, start moments of all time domain resources in the plurality of time domain resources in the service transmission period may be the same or may be different. This is not limited in embodiments of this application. Further, the first apparatus may indicate a start moment and an end moment of each time domain resource in the service transmission period, or may indicate only a start moment of each time domain resource in the service transmission period, and does not indicate an end moment of each time domain resource in the service transmission period. This is not limited in embodiments of this application. In addition, when one time domain resource is allocated in each service transmission period, and the first apparatus indicates only a start moment of each time domain resource in the service transmission period, but does not indicate an end moment of each time domain resource in the service transmission period, a time domain length of each time domain resource may be one service transmission period, that is, an end moment of one time domain resource may be a start moment of a next time domain resource. However, this is not limited in embodiments of this application.

For example, the first apparatus is a master node, and the second apparatus is a slave node. The first apparatus may allocate at least one time domain resource to the second apparatus. The at least one time domain resource is greater than or equal to a time domain resource corresponding to a quantity of transmission times that meets reliability. The at least one time domain resource is used for the data transmission between the first apparatus and the second apparatus. Each time domain resource in the at least one time domain resource is continuous in time domain. The first information may be physical layer signaling, or may be higher layer signaling such as media access layer signaling or link control layer signaling, or may be other signaling or another signal, or may be one or more fields in the foregoing signaling. A specific form of the first information is not limited in embodiments of this application.

For example, the first apparatus may allocate at least one time domain resource to the second apparatus by using a time domain resource unit as a granularity. A quantity of time domain resource units included in each time domain resource in the at least one time domain resource may be the same or may be different. This is not limited in embodiments of this application. For example, the first time domain resource is one of the at least one time domain resource, the first time domain resource includes N time domain resource units, and N is a positive integer greater than 0. A time domain resource unit may be a time unit such as a super frame, a frame, a subframe, a slot, an event, or a sub-event, or may be a unit group constructed by a plurality of continuous time units, or the like. For example, the time domain resource unit may be predefined in a protocol, or may be pre-agreed on by the first apparatus and the second apparatus, or may be configured by the first apparatus. For example, the first apparatus sends third information to the second apparatus. The third information indicates a configuration of the time domain resource unit. The third information may be higher layer signaling. It may be understood that a specific implementation form of the time domain resource unit is not limited in embodiments of this application. In addition, the third information and the first information may be same information. In other words, the first information not only indicates the at least one time domain resource, but also indicates the configuration of the time domain resource unit, or may be different information. This is not limited in embodiments of this application.

S42: The first apparatus sends second information to the second apparatus on the first time domain resource. Correspondingly, the second apparatus receives the second information from the first apparatus on the first time domain resource.

For example, the first apparatus may determine whether to send the second information to the second apparatus on the first time domain resource. In other words, the first apparatus first determines whether to send the second information to the second apparatus on the first time domain resource, and after determining to send the second information to the second apparatus on the first time domain resource, the first apparatus sends the second information to the second apparatus on the first time domain resource. For example, the first apparatus may determine, based on a historical transmission status with the second apparatus and/or another apparatus, whether to send the second information to the second apparatus. To be specific, the first apparatus determines, based on the historical transmission status, whether to perform the data transmission with the second apparatus on the first time domain resource. For example, after the first apparatus performs data transmission with another apparatus on the first time domain resource, if a remaining time domain resource of the first time domain resource is insufficient, the first apparatus determines not to send the second information to the second apparatus on the first time domain resource. In another example, if a priority of performing the data transmission between the first apparatus and the another apparatus on the first time domain resource is higher than a priority of performing the data transmission between the first apparatus and the second apparatus, the first apparatus determines not to send the second information to the second apparatus on the first time domain resource. Further, when the first apparatus determines not to send the second information to the second apparatus on the first time domain resource, the first time domain resource is not used for the data transmission between the first apparatus and the second apparatus.

The second information may include identification information of the second apparatus, or include identification information of a communication link between the first apparatus and the second apparatus, or include identification information of the second apparatus and identification information of a communication link between the first apparatus and the second apparatus, to indicate that the second information is used for the data transmission between the first apparatus and the second apparatus. Data transmitted between the first apparatus and the second apparatus may be video data, audio data, picture information, or the like. This is not limited in embodiments of this application. The identification information of the second apparatus may be an identifier of the second apparatus, or may be other information used for distinguishing from another apparatus. Similarly, the identification information of the communication link between the first apparatus and the second apparatus may be an identifier of the communication link, or may be other information used for distinguishing from another communication link (for example, a communication link other than the communication link between the first apparatus and the second apparatus, and/or a communication link between the first apparatus and another apparatus).

For example, when the second information includes only the identifier of the second apparatus, the second information may be used for distinguishing from data transmission with another apparatus. When the second information includes only the identifier of the communication link with the second apparatus, the second information may be used for distinguishing from data transmission on another communication link. When the second information includes the identifier of the second apparatus and the identifier of the communication link with the second apparatus, the second information may be used for distinguishing from data transmission on another communication link and distinguishing from the data transmission with the another apparatus. For example, in a multicast, broadcast, or another type of communication link, the first apparatus and a plurality of apparatuses (including the second apparatus) may perform data transmission on a same communication link. It may be determined, by using the identifier of the second apparatus, that the second information indicates to perform the data transmission with the second apparatus through the communication link.

In embodiments of this application, the second information may indicate a start moment K of the data transmission between the first apparatus and the second apparatus. The start moment K may be a start moment of one or a series of data transmission between the first apparatus and the second apparatus. The start moment K belongs to the first time domain resource, and the first time domain resource is one of the at least one time domain resource and is a time domain resource used for the data transmission between the first apparatus and the second apparatus. For example, the first apparatus sends the second information to the second apparatus on the first time domain resource, and the second apparatus detects and receives the second information on the first time domain resource. Further, the second apparatus may determine, based on the second information, the start moment K of the data transmission with the first apparatus.

For ease of understanding embodiments of this application, the following describes a data packet sent by the second apparatus to the first apparatus as a first data packet and data sent by the first apparatus to the second apparatus as a second data packet. In other words, the first data packet is a data packet generated by the second apparatus and then sent to the first apparatus, and the second data packet is a data packet generated by the first apparatus and then sent to the second apparatus. The generation of the data packet may include one or more of operations such as encoding, modulation, or resource mapping on higher layer data.

In this embodiment of this application, the data transmission between the first apparatus and the second apparatus may be one-way data transmission. For example, the second apparatus sends the first data packet to the first apparatus on the first time domain resource, or the first apparatus sends the second data packet to the second apparatus on the first time domain resource. Alternatively, the data transmission between the first apparatus and the second apparatus may be two-way data transmission. For example, the second apparatus sends the first data packet to the first apparatus on the first time domain resource, and the first apparatus sends the second data packet to the second apparatus on the first time domain resource.

It should be noted that the foregoing series of data transmission between the first apparatus and the second apparatus refers to a series of data transmission in a one-way transmission direction. For example, the first apparatus sends a plurality of data packets to the second apparatus, and each time the second apparatus successfully receives a data packet, the first apparatus sends a next data packet to the second apparatus. In this case, the start moment K is a start moment of the first data packet in the plurality of data packets.

The start moment K may be understood as a start moment at which initial transmission and/or retransmission of data are/is started between the first apparatus and the second apparatus. In other words, the start moment K may be a start moment at which initial transmission or retransmission of data starts in one-way data transmission. For example, when the first apparatus is a sending node, and the second apparatus is a receiving node, the start moment K may be a sending moment at which the first apparatus initially transmits the second data packet to the second apparatus. In another example, when the first apparatus is a receiving node, and the second apparatus is a sending node, the start moment K may be a sending moment at which the second apparatus retransmits the first data packet to the first apparatus. Alternatively, the start moment K may be a start moment at which retransmission of data starts in both data transmission directions, or a start moment at which initial transmission of data starts in one data transmission direction, or a start moment at which retransmission of data starts in the other data transmission direction. For example, the start moment K is a sending moment at which the first apparatus initially transmits the second data packet to the second apparatus, and is also a sending moment at which the second apparatus initially transmits the first data packet to the first apparatus. In another example, the start moment K is a sending moment at which the first apparatus retransmits the second data packet to the second apparatus, and is also a sending moment at which the second apparatus initially transmits the first data packet to the first apparatus.

Alternatively, the start moment K may be understood as a start moment at which data transmission is started between the first apparatus and the second apparatus. In other words, regardless of whether the data is initially transmitted or retransmitted, the start moment K is a start moment at which the first apparatus and the second apparatus start to perform data transmission.

It should be noted that the first time domain resource may be a time domain resource that does not distinguish between initial transmission and retransmission, or may be a time domain resource dedicated to retransmission or initial transmission. For two-way transmission, the first time domain resource may be a time domain resource dedicated to initial transmission or retransmission in one transmission direction, and a time domain resource dedicated to initial transmission or retransmission in the other transmission direction is not distinguished; or may be a time domain resource dedicated to initial transmission or retransmission in two transmission directions.

In another possible implementation, the second information may be a trigger signal or include a trigger signal, and the trigger signal is used for triggering the data transmission between the first apparatus and the second apparatus. Further, the second information may further include data obtained after channel coding and/or modulation. The data may be service data, or control information, or service data and control information. In this case, the data transmitted between the first apparatus and the second apparatus may include data included in the second information, or may not include data included in the second information. A specific form of the second information is not limited in embodiments of this application.

In embodiments of this application, the second information may indicate the start moment K implicitly or explicitly.

The second information may implicitly indicate the start moment K. For example, a time domain resource used by the second information indicates the start moment K.

For example, in an implicit indication manner, a sending moment of the second information indicates the start moment K. For example, the sending moment of the second information is equal to the start moment K. For example, the first apparatus is a sending node, and the second apparatus is a receiving node. The first apparatus may send the second data packet and the second information to the second apparatus together at a moment K in the first time domain resource. In other words, the first apparatus sends the second information and the second data packet to the second apparatus at a same moment, as shown in FIG. 5A. The second apparatus receives (or detects) the second information on the first time domain resource, and may determine, after receiving (or detecting) the second information, that the start moment K is a moment at which the second information is received.

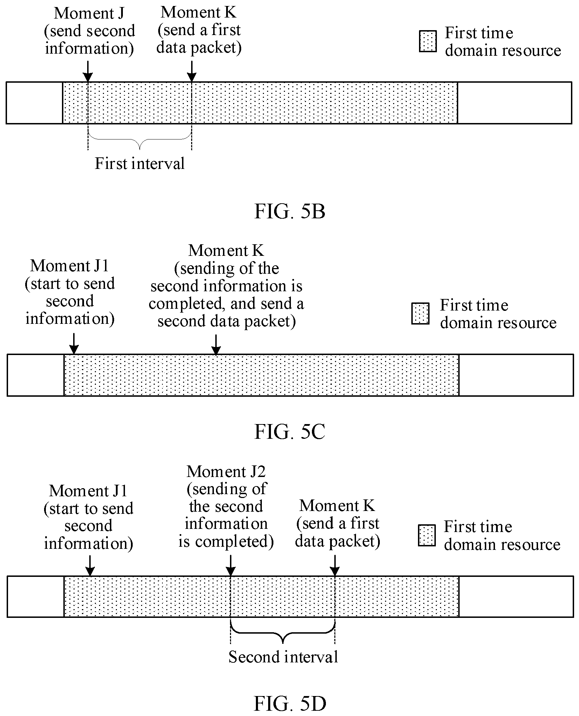

For example, in an implicit indication manner, a sending moment of the second information indicates the start moment K. For example, there is a first interval between the sending moment of the second information and the start moment K. For example, the first apparatus sends the second information to the second apparatus at a moment J of the first time domain resource. In this case, after detecting the second information, the second apparatus may determine that the start moment K is a sum of the moment J and the first interval. Further, the first apparatus starts to send the second data packet to the second apparatus at the start moment K, or the second apparatus starts to send the first data packet to the first apparatus at the start moment K, as shown in FIG. 5B.

In another example, in an implicit indication manner, a sending completion moment of the second information indicates the start moment K. For example, the sending completion moment of the second information is equal to the start moment K. For example, the first apparatus is a sending node, and the second apparatus is a receiving node. The first apparatus sequentially sends the second information and the second data packet to the second apparatus on the first time domain resource. For example, the first apparatus starts to send the second information to the second apparatus at a moment J1 on the first time domain resource, completes sending of the second information at a moment J2, and sends the second data packet to the second apparatus at the moment J2. In other words, the sending completion moment of the second information is equal to a sending moment of the second data packet, as shown in FIG. 5C. The second apparatus receives (or detects) the second information on the first time domain resource, and may determine, after receiving of the second information is completed, that the start moment K is a receiving completion moment of the second information.

In another example, in an implicit indication manner, a sending completion moment of the second information indicates the start moment K. For example, there is a second interval between the sending completion moment of the second information and the start moment K. For example, the first apparatus starts to send the second information to the second apparatus at the moment J1 of the first time domain resource, and completes sending of the second information at the moment J2. In this case, after detecting the second information, the second apparatus may determine that the start moment K is a sum of the moment J2 and the second interval, as shown in FIG. 5D. Further, the first apparatus starts to send the second data packet to the second apparatus at the start moment K, and/or the second apparatus starts to send the first data packet to the first apparatus at the start moment K.

For example, the first interval may be the same as or different from the second interval. This is not limited in embodiments of this application. The first interval may be predefined, or agreed upon by the first apparatus and the second apparatus in advance, or configured by the first apparatus. For example, the first interval may be an interval selected by the sending node from an interval set or range that is predefined, agreed upon with the receiving node, or preconfigured. Correspondingly, the receiving node may detect a data packet from the sending node based on an interval set or range that is predefined, agreed upon with the sending node, or preconfigured. Similarly, the second interval may be predefined, or agreed upon by the first apparatus and the second apparatus in advance, or configured by the first apparatus.

Alternatively, the second information may indicate the start moment K in another implicit indication manner. The foregoing is merely an example, and does not limit the implicit indication manner. The start moment K of the data transmission between the first apparatus and the second apparatus is indicated in an implicit manner, and the second information does not need to carry additional information to indicate the start moment K, so that overheads of the second information are reduced. In addition, generally, when a same quantity of resources are used, less transmitted information indicates higher transmission reliability. In this case, because the second information does not need to carry additional information to indicate the start moment K, it is equivalent to that a small amount of information is transmitted by using a same quantity of resources. Therefore, transmission reliability of the second information can be improved.

Alternatively, the second information indicates the start moment K, or may be explicitly indicated.

For example, in an explicit indication manner, if the second information includes time domain information related to the start moment K, a location of the start moment K in the first time domain resource is indicated. In this case, after detecting the second information, the second apparatus may decode the second information to obtain time domain information related to the start moment K, and determine the start moment K based on the time domain information related to the start moment K.

In another example, in an explicit indication manner, the second information includes an identifier (or a number, a sequence number, or the like) of a time domain resource unit. For example, the first time domain resource includes N time domain resource units, the time domain resource unit to which the start moment K belongs is an M* time domain resource unit in the N time domain resource units, and the second information may include an identifier of the M^{th} time domain resource unit. In this case, after detecting the second information, the second apparatus may perform one or more of operations such as demodulation, decoding, and translation on the second information to obtain an identifier of the time domain resource unit, and determine, based on the identifier of the time domain resource unit, that the start moment K is a moment in the time domain resource unit.

For example, the N time domain resource units may be counted from 1, for example, denoted as time domain resource units 1 to N, or may be counted from 0, for example, denoted as time domain resource units 0 to N-1. Certainly, the N time domain resource units may be alternatively counted from another number. This is not limited in embodiments of this application. For ease of description, in embodiments of this application, an example in which the N time domain resource units are counted from 1 is used for description. The first time domain resource unit in the N time domain resource units may be the frontmost time domain resource unit in the N time domain resource units in time domain. In other words, a time domain resource unit 1 is the frontmost time domain resource unit in the N time domain resource units in time domain.

N a positive integer greater than 0. M is a positive integer greater than 0 and less than or equal to N. For example, M is equal to 1, and a time domain resource unit to which the start moment K belongs is the first time domain resource unit in the N time domain resource units. In other words, the data transmission between the first apparatus and the second apparatus starts in the first time domain resource unit in the N time domain resource units. In another example, M is greater than 1, and a time domain resource unit to which the start moment K belongs is a time domain resource unit other than the first time domain resource unit in the N time domain resource units. In other words, the data transmission between the first apparatus and the second apparatus does not start in the first time domain resource unit in the N time domain resource units. For example, M-1 time domain resource units in front of the M^{th} time domain resource unit are not in an idle state. For example, the M-1 time domain resource units have been used for data transmission between the first apparatus and another apparatus other than the second apparatus, or used for data transmission between the second apparatus and another apparatus other than the first apparatus, or used for data transmission between other apparatuses other than the first apparatus and the second apparatus.

Certainly, the second information may indicate the start moment K in another explicit indication manner. The foregoing is merely an example, and does not limit the explicit indication manner.

It should be noted that, for ease of description, in embodiments of this application, inconsistent understanding of timing between the sending node and the receiving node caused by non-ideal factors such as electromagnetic wave propagation, a synchronization error between the sending node and the receiving node, and a timing adjustment error is ignored. For example, there is actually an error between the start moment K indicated by the sending node and the start moment K that is determined by the receiving node based on the timing of the receiving node after the receiving node receives the indication. Currently, the error may be processed in a plurality of manners, for example, a manner in which the receiving node attempts to receive the error at a plurality of moments near the receiving moment. How to process the error is not limited in embodiments of this application.

In embodiments of this application, an example in which the first apparatus uses the sending moment (or the sending completion moment) of the second information to indicate the start moment K is used to describe a possible understanding manner of the sending moment (or the sending completion moment) of the second information and a corresponding manner of determining the start moment K by the second apparatus that receives the second information, and another case in which the sending node and the receiving node have inconsistent understandings of timing. For details, refer to the following understandings.

That the sending moment of the second information indicates the start moment K may be understood as that the moment at which the second information is received indicates the start moment K, or a moment at which the first apparatus sends the second information and that is determined based on the moment at which the second information is received and other information (for example, timing advance information configured by the first apparatus for the second apparatus) indicates the start moment K. Similarly, that there is the first interval between the sending moment of the second information and the start moment K may be understood as that there is the first interval between the moment at which the second information is received and the start moment K, or that there is the first interval between the moment at which the first apparatus sends the second information and the start moment K. That the sending completion moment of the second information indicates the start moment K may be understood as that the receiving completion moment of the second information indicates the start moment K, or the sending completion moment of the second information by the first apparatus indicates the start moment K. That there is the second interval between the sending completion moment of the second information and the start moment K may be understood as that there is the second interval between the receiving completion moment of the second information and the start moment K, or there is the second interval between the sending completion moment of the second information by the first apparatus and the start moment K. In another possible design, the foregoing other information may be indicated in another manner or preconfigured.

For example, in one-way data transmission, the first apparatus sends the second data packet to the second apparatus. For the second apparatus, that a sending moment (or a sending completion moment) of the second information indicates the start moment K may be understood as that a moment at which the second information is received (or a receiving completion moment of the second information) indicates the start moment K. For example, the second apparatus receives the second information on the first time domain resource, and may determine, after receiving the second information, that the start moment K is the moment at which the second information is received; or may be understood as that a moment (or the sending completion moment of the second information by the first apparatus) at which the first apparatus sends the second information indicates the start moment K. For example, the second apparatus receives the second information on the first time domain resource, and after receiving the second information, may obtain, based on a moment at which the second information is received and other information (for example, timing advance information configured by the first apparatus for the second apparatus) sent together with the second information, a moment at which the first apparatus sends the second information, and determine the start moment K as the moment at which the first apparatus sends the second information.

In another example, in one-way data transmission, the second apparatus sends the first data packet to the first apparatus. For the second apparatus, that the sending moment (or the sending completion moment) of the second information implicitly indicates the start moment K may be understood as that the moment (or the receiving completion moment of the second information) at which the second information is received indicates the start moment. In other words, the second apparatus starts to send the first data packet to the first apparatus at a moment (or the receiving completion moment of the second information) at which the second information is received.

In another example, in two-way data transmission, the start moment K may be understood as two moments, that is, a moment at which the second apparatus starts to send the first data packet and a moment at which the first apparatus starts to send the second data packet. For example, for the second apparatus, that a sending moment (or a sending completion moment) of the second information indicates a start moment K may be understood that a moment at which the first apparatus starts to send the second data packet is a moment at which the first apparatus sends the second information (or the sending completion moment of the second information by the first apparatus), and a moment at which the second apparatus starts to send the first data packet is a moment at which the second information is received (or the receiving completion moment of the second information).

Certainly, the first apparatus may explicitly indicate, in the second information, the start moment K that includes the two moments. For example, the second information may include time domain information related to a start moment of transmitting the second data packet and time domain information related to a start moment of transmitting the first data packet, which are respectively used for indicating locations of the start moment of transmitting the second data packet and the start moment of transmitting the first data packet on the first time domain resource.

In a possible implementation, the start moment K may be a start moment of the first time domain resource. For example, the first apparatus may send the second information to the second apparatus at the start moment of the first time domain resource, and the second information implicitly indicates that the start moment of the first time domain resource is the start moment K. Alternatively, the start moment K may not be the start moment of the first time domain resource. To be specific, the start moment K is any moment other than the start moment in the first time domain resource.

As described above, the first apparatus may allocate a time domain resource to the second apparatus by using a time domain resource unit as a granularity. For example, the first time domain resource includes N time domain resource units, and a time domain resource unit to which the start moment K belongs is the M^{th} time domain resource unit in the N time domain resource units.

In embodiments of this application, the start moment K may be a specific moment in the M^{th} time domain resource unit, or may be any moment in the M^{th} time domain resource unit. For example, the start moment K is a start moment, an end moment, or the like of the M^{th} time domain resource unit. In this case, when the second information implicitly indicates the start moment K, the first apparatus may send the second information (or complete sending of the second information) to the second apparatus at the start moment or the end moment of the M^{th} time domain resource unit. In this way, the second apparatus needs to detect the second information only at the start moment or the end moment of each time domain resource unit in the N time domain resource units. In other words, the second apparatus does not need to detect the entire time domain resource unit, so that a quantity of blind detections performed by the second apparatus is reduced.

In a possible implementation, the start moment K indicated by the second information may be a moment in the M^{th} time domain resource unit. In other words, the second information may implicitly or explicitly indicate some information at the start moment K, and a specific location of the start moment K in the M^{th} time domain resource unit is not indicated by the second information. For example, the second information indicates the identifier of the M^{th} time domain resource unit. After receiving the second information, the second apparatus may determine that the start moment K belongs to the M^{th} time domain resource unit. Further, the second apparatus may determine a location of the start moment K in the M^{th} time domain resource unit based on a transmission status in the M^{th} time domain resource unit. For example, if the second apparatus detects the second information at a start moment of the M^{th} time domain resource unit, the second apparatus may determine that the start moment K is a moment that is in the M^{th} time domain resource unit and that has a specified interval with the receiving completion moment of the second information.

Optionally, if the first apparatus allocates at least one time domain resource to the second apparatus by using a time domain resource unit as a granularity, to be specific, the first time domain resource includes N time domain resource units, in this case, that the first apparatus sends the second information to the second apparatus on the first time domain resource may be: The first apparatus starts to send the second information from an L^{th} time domain resource unit in the N time domain resource units. For example, the first apparatus may start to send the second information at a start moment or an end moment of the L^{th} time domain resource unit, to reduce a quantity of blind detections of the second apparatus.

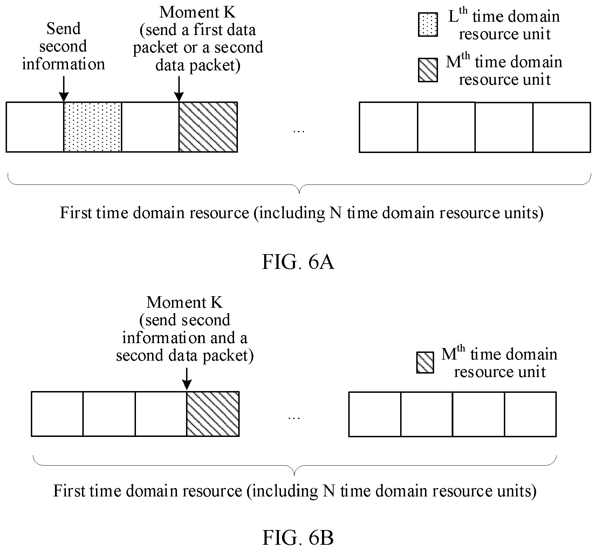

For example, L is a positive integer greater than 0 and less than or equal to M. In other words, the first apparatus may start to send the second information to the second apparatus on a time domain resource unit before the time domain resource unit to which the start moment K belongs. For example, the start moment of the L^{th} time domain resource is the sending moment of the second information, and the start moment of the M^{th} time domain resource unit is the start moment K, as shown in FIG. 6A. Alternatively, the second information may be sent to the second apparatus from the time domain resource unit to which the start moment K belongs, that is, L is equal to M. For example, the start moment of the M^{th} time domain resource unit is the sending moment of the second information and the second data packet, as shown in FIG. 6B.

In a possible implementation, L may be equal to 1. To be specific, the first apparatus starts to send the second information to the second apparatus in the first time domain resource unit in the N time domain resource units. For example, the first apparatus starts to send the second information to the second apparatus at a start moment or an end moment of the first time domain resource unit. Alternatively, L may not be equal to 1, that is, L is a positive integer greater than 1 and less than or equal to M. In other words, the first apparatus sends the second information to the second apparatus in a time domain resource unit that is other than the first time domain resource in the N time domain resource units and that is not later than the M^{th} time domain resource unit.

It should be noted that, that the first apparatus starts to send the second information to the second apparatus at the start moment of the L^{th} time domain resource unit means that the sending moment of the second information is the start moment of the L^{th} time domain resource unit. The sending completion moment of the second information may be the end moment of the L^{th} time domain resource unit, or may not be the end moment of the L^{th} time domain resource unit. In other words, the sending completion moment of the second information is not necessarily aligned with the end moment of the L^{th} time domain resource unit. For example, that the start moment K is the sending completion moment of the second information may mean that the start moment K is a start moment of a next time domain resource unit of the L^{th} time domain resource unit, that is, a start moment of an (L+1)^{th} time domain resource unit. In another example, that there is the second interval between the start moment K and the sending completion moment of the second information may mean a start moment of a next time domain resource of a time domain resource unit in which the second information is located after the second interval elapses after sending of the second information is completed.

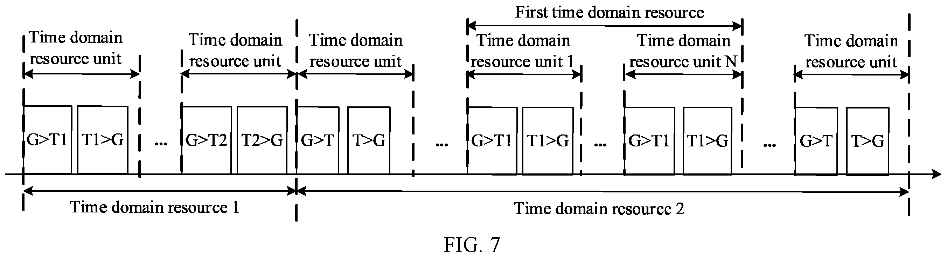

As described above, the data transmission between the first apparatus and the second apparatus may be one-way data transmission, or may be two-way data transmission. In this case, the following describes in detail the data transmission between the first apparatus and the second apparatus with reference to FIG. 7. It should be understood that FIG. 7 is used as an example, and does not limit embodiments of this application.

As shown in FIG. 7, a time domain resource 1 (which may also be referred to as a reservation interval, reservation interval) may include one or more time domain resource units. In FIG. 7, an example in which more than two time domain resource units are included is used. A time domain resource 2 (which may also be referred to as a retransmission time domain resource, a retry interval, or the like, retry interval) may also include one or more time domain resource units. In FIG. 7, an example in which more than three time domain resource units are included is used. Transmission of a data packet may be completed in one time domain resource unit. Transmission of a data packet includes a process in which a sending node sends the data packet to a receiving node, and the receiving node receives the data packet and feeds back a receiving status of the data packet to the sending node, that is, sends an ACK message or a NACK message to the sending node.

In FIG. 7, one block is used to represent one transmission direction, and each time domain resource unit may include one or two transmission directions. In FIG. 7, an example in which one time domain resource unit includes two transmission directions is used. In addition, in FIG. 7, G>T indicates that a master node sends a data packet or a message to a slave node, and T>G indicates that the slave node sends a data packet or a message to the master node. For example, the first apparatus is the master node. A process in which the first apparatus sends data or a message to the second apparatus may be denoted as G>T1, a process in which the second apparatus sends a data packet or a message to the first apparatus may be denoted as T1>G, a process in which the first apparatus sends data or a message to a third apparatus may be denoted as G>T2, and a process in which the third apparatus sends a data packet or a message to the first apparatus may be denoted as T2>G. As shown in FIG. 7, on the time domain resource 1, the first apparatus may send a data packet to a plurality of apparatuses. Specifically, on the time domain resource 1, the first apparatus sends a second data packet to the second apparatus, and the second apparatus feeds back a receiving status of the second data packet to the first apparatus; and the first apparatus sends a third data packet to the third apparatus, and the third apparatus feeds back a receiving status of the third data packet to the first apparatus. It may be understood that the time domain resource 1 may be used for initial transmission of data, or may be used for retransmission of data, or may be used for initial transmission and retransmission of data. This is not limited in embodiments of this application.

FIG. 7 is used as an example to describe only a case in which the first apparatus sends a data packet to another apparatus on the time domain resource 1. It may be understood that the another apparatus may also send a data packet to the first apparatus on the time domain resource 1, or other apparatuses may also transmit data on the time domain resource 1 under scheduling of the first apparatus. Further, the time domain resource 1 may be used for one-way data transmission, or may be used for two-way data transmission. For example, on the time domain resource 1, the first apparatus sends the second data packet to the second apparatus, and the second apparatus sends the first data packet to the first apparatus.

The time domain resource 2 is used for retransmitting a data packet that is not correctly received on the time domain resource 1. For example, if the second apparatus does not correctly receive the second data packet from the first apparatus on the time domain resource 1, the first apparatus may retransmit the second data packet on the time domain resource 2. In another example, if the first apparatus does not correctly receive the first data packet from the second apparatus on the time domain resource 1, the second apparatus may retransmit the first data packet on the time domain resource 2. FIG. 7 is used as an example to describe only a case in which the first apparatus retransmits a data packet to another apparatus on the time domain resource 2. It may be understood that the another apparatus may also retransmit a data packet to the first apparatus on the time domain resource 2, or other apparatuses may also retransmit data on the time domain resource 2 under scheduling of the first apparatus.

The first apparatus allocates a first time domain resource to the second apparatus. The first time domain resource may be a part or all of the time domain resource 2. The first time domain resource may include N time domain resource units, denoted as time domain resource units 1 to N, as shown in FIG. 7. The first time domain resource may be used for retransmission of the first data packet, retransmission of the second data packet, or retransmission of the first data packet and the second data packet.

The data transmission between the first apparatus and the second apparatus may be one-way data transmission.

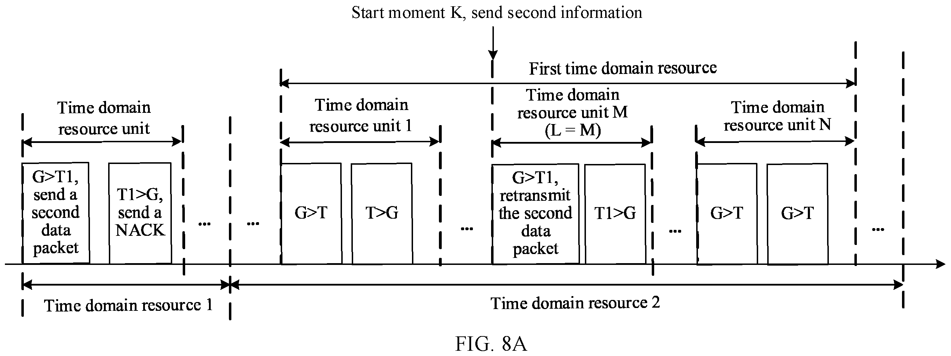

For example, if the second apparatus does not correctly receive the second data packet from the first apparatus on the time domain resource 1. After determining that the second apparatus does not correctly receive the second data packet, the first apparatus may send the second information to the second apparatus on the first time domain resource. The second information indicates the start moment K of transmitting the second data packet. For example, the start moment K belongs to the M^{th} time domain resource unit (denoted as a time domain resource unit M) in the first time domain resource. For example, the start moment K is the sending moment of the second information. A procedure in which the first apparatus retransmits the second data packet may be as follows: The first apparatus sends the second information and the second data packet to the second apparatus at the start moment of the Lth time domain resource unit (denoted as a time domain resource unit L) in the first time domain resource; and the second apparatus starts to check the second information at the start moment of each time domain resource unit, detects the second information at the start moment of the time domain resource unit L, and starts to receive the second data packet retransmitted by the first apparatus, as shown in FIG. 8A. L is a positive integer less than or equal to M and greater than 0. For ease of understanding of this embodiment, the following uses an example in which L is equal to M for description.

It may be understood that when L is not equal to 1, that is, the first apparatus does not send the second information to the second apparatus at the start moment of the time domain resource unit 1, some or all of the time domain resource units 1 to L-1 may be used for data transmission between the first apparatus and another apparatus other than the second apparatus, or may be used for data transmission between two other apparatuses other than the first apparatus.

It should be noted that, that the first apparatus determines that the second apparatus does not correctly receive the second data packet may be understood as follows: The first apparatus receives, on the time domain resource 1, a NACK message from the second apparatus, and determines, based on the NACK message, that the second apparatus does not correctly receive the second data packet, as shown in FIG. 8A; or may be understood as that the first apparatus does not correctly receive the ACK message or the NACK message from the second apparatus within specified duration on the time domain resource 1, and the first apparatus determines that the second apparatus does not correctly receive the second data packet.

It should be noted that, due to a synchronization error of the receiving node relative to the sending node, a moment at which the receiving node starts receiving may be understood as a reference moment, that is, the receiving node performs a search near the reference moment to determine an actual moment at which the receiving node starts receiving. Similarly, a moment at which the receiving node starts checking may be understood as a reference moment, and the receiving node detects a plurality of moments near the reference moment during detection.

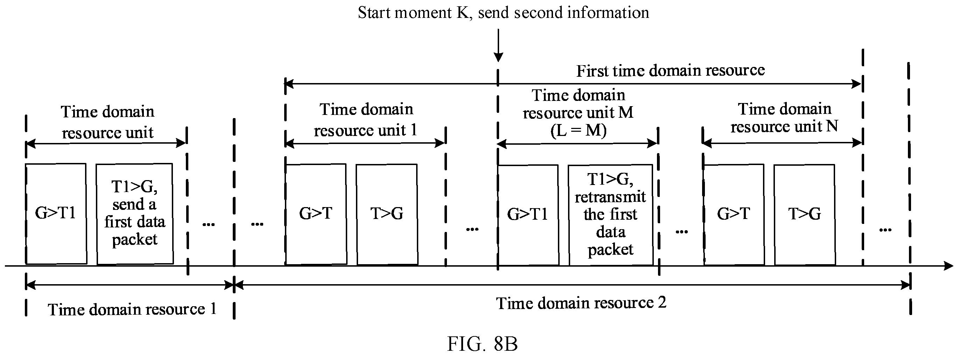

In another example, on the time domain resource 1, the first apparatus does not correctly receive the first data packet from the second apparatus. After determining that the first apparatus does not correctly receive the first data packet, the first apparatus may send the second information to the second apparatus on the first time domain resource. The second information indicates the start moment K of transmitting the second data packet. For example, the start moment K belongs to the time domain resource unit M. For example, there is the first interval between the start moment K and the sending moment of the second information. A procedure in which the second apparatus retransmits the first data packet may be as follows: The first apparatus sends the second information to the second apparatus at the start moment of the time domain resource unit L; and the second apparatus starts to check the second information at the start moment of each time domain resource unit, detects the second information at the start moment of the time domain resource unit L, and starts to retransmit the first data packet to the first apparatus based on the second information at a moment at the first interval with the sending moment of the second information, as shown in FIG. 8B.

It should be noted that, after the first apparatus does not correctly receive the first data packet, the first apparatus may send the NACK message to the second apparatus on the time domain resource 1, so that the second apparatus determines that the first apparatus does not correctly receive the first data packet; or after the first apparatus does not correctly receive the first data packet, the first apparatus may not send the NACK message to the second apparatus. In this case, the second apparatus may determine, by detecting the second information in the time domain resource unit M, that the first apparatus does not correctly receive the first data packet, as shown in FIG. 8B.

It may be understood that, in a case of one-way data transmission, the first apparatus correctly receives the first data packet from the second apparatus on the time domain resource 1, and the first time domain resource does not need to retransmit the first data packet; or the second apparatus correctly receives the second data packet from the first apparatus on the time domain resource 1, and the first time domain resource does not need to retransmit the second data packet. The first apparatus may pre-allocate some or all of the first time domain resources to data transmission between the first apparatus and another apparatus other than the second apparatus, or to data transmission between the second apparatus and another apparatus other than the first apparatus, or to data transmission between other apparatuses other than the first apparatus and the second apparatus. In this way, the first apparatus may send, based on an actual transmission status of data on the time domain resource 1, the second information to indicate an apparatus that uses the some or all of the first time domain resources. In this way, a time domain resource conflict is avoided, and time domain resource utilization can be improved.

Alternatively, the data transmission between the first apparatus and the second apparatus may be two-way data transmission.

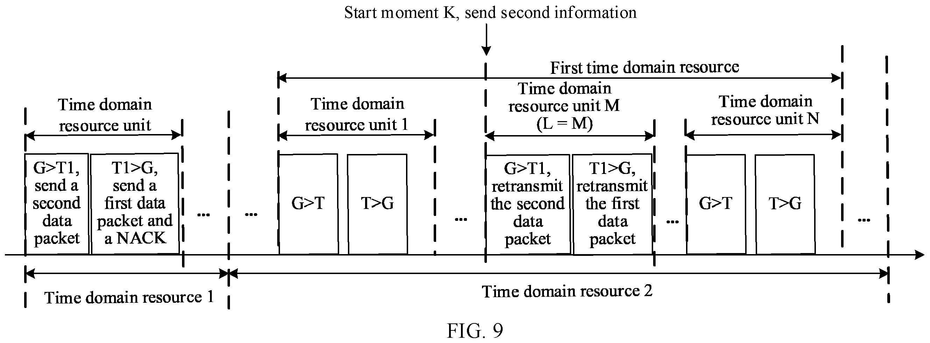

For example, on the time domain resource 1, the first apparatus does not correctly receive the first data packet from the second apparatus, and the second apparatus does not correctly receive the second data packet from the first apparatus. After determining that the first apparatus does not correctly receive the first data packet and the second apparatus does not correctly receive the second data packet, the first apparatus may send the second information to the second apparatus on the first time domain resource. The second information indicates the start moment K of transmitting the first data packet and the second data packet. For example, the start moment K belongs to the time domain resource unit M. For example, there is the first interval between the start moment of transmitting the first data packet and the sending moment of the second information, and the start moment of transmitting the second data packet is the sending moment of the second information. A procedure in which the first apparatus retransmits the second data packet and the second apparatus retransmits the first data packet may be as follows: The first apparatus sends the second information to the second apparatus and starts to retransmit the second data packet to the second apparatus at the start moment of the time domain resource unit L; and the second apparatus starts to check the second information at the start moment of each time domain resource unit, detects the second information at the start moment of the time domain resource unit L, starts to receive the retransmitted second data packet, and starts to retransmit the first data packet to the first apparatus based on the second information at a moment at the first interval with the sending moment of the second information, as shown in FIG. 9.

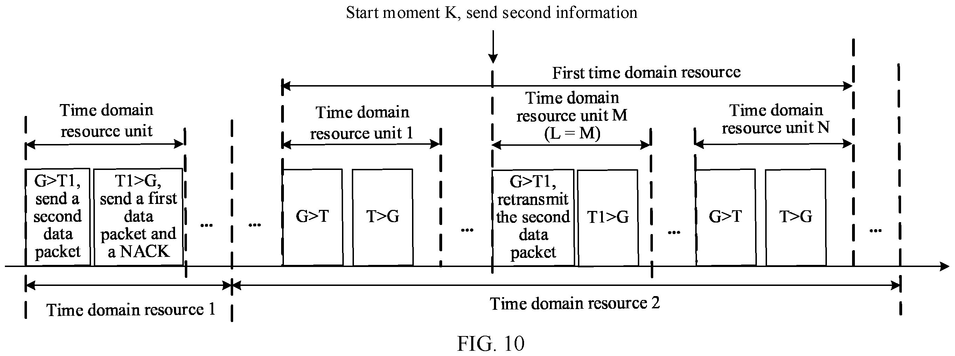

In another example, on the time domain resource 1, the first apparatus correctly receives the first data packet from the second apparatus, but the second apparatus does not correctly receive the second data packet from the first apparatus. After determining that the second apparatus does not correctly receive the second data packet, the first apparatus may send the second information to the second apparatus on the first time domain resource. The second information indicates the start moment K of transmitting the second data packet. For example, the start moment K belongs to the time domain resource unit M. For example, the start moment of transmitting the second data packet is the sending moment of the second information. A procedure in which the first apparatus retransmits the second data packet may be as follows: The first apparatus sends the second information to the second apparatus and starts to retransmit the second data packet to the second apparatus at the start moment of the time domain resource unit L; and the second apparatus starts to check the second information at the start moment of each time domain resource unit, detects the second information at the start moment of the time domain resource unit L, and starts to receive the retransmitted second data packet, as shown in FIG. 10.

Further, on the first time domain resource, the second apparatus may send a new data packet to the first apparatus. For example, after receiving the second information, the second apparatus may send the new data packet to the first apparatus at a moment at the first interval with the sending moment of the second information; or may not send a new data packet to the first apparatus. For example, the second apparatus sends only an ACK message or a NACK message to the first apparatus, to feed back a receiving status of the retransmitted second data packet to the first apparatus.

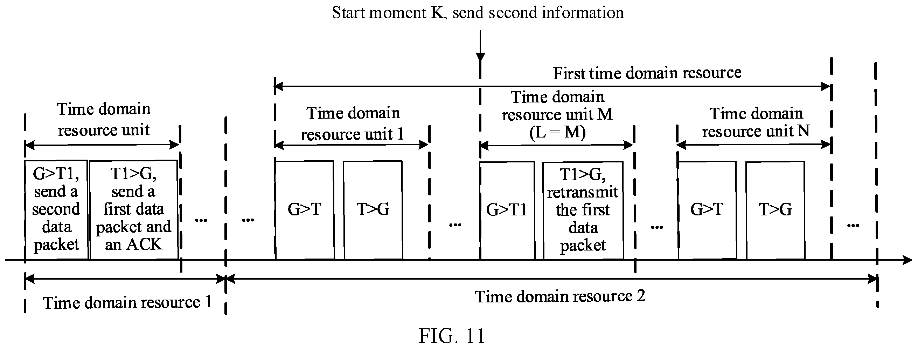

In another example, on the time domain resource 1, the second apparatus correctly receives the second data packet from the first apparatus, but the first apparatus does not correctly receive the first data packet from the second apparatus. After determining that the first apparatus does not correctly receive the first data packet, the first apparatus may send the second information to the second apparatus on the first time domain resource. The second information indicates the start moment K of transmitting the first data packet. For example, the start moment K belongs to the time domain resource unit M. For example, there is the first interval between the start moment of transmitting the first data packet and the sending moment of the second information. A procedure in which the second apparatus retransmits the first data packet may be as follows: The first apparatus sends the second information to the second apparatus at the start moment of the time domain resource unit L; and the second apparatus starts to check the second information at the start moment of each time domain resource unit, detects the second information at the start moment of the time domain resource unit L, and starts to retransmit the first data packet to the first apparatus based on the second information at a moment at which the first interval exists with the sending moment of the second information, as shown in FIG. 11.

Further, on the first time domain resource, the first apparatus may send a new data packet to the second apparatus, for example, the first apparatus sends a new data packet to the second apparatus while sending the second information to the second apparatus; or may not send a new data packet to the second apparatus, for example, the first apparatus sends only an ACK message or a NACK message to the second apparatus, to feed back a receiving status of the retransmitted first data packet to the second apparatus.

It may be understood that, in a case of two-way data transmission, the first apparatus correctly receives the first data packet from the second apparatus on the time domain resource 1; and the second apparatus correctly receives the second data packet from the first apparatus on the time domain resource 1, and the first time domain resource does not need to retransmit the first data packet and the second data packet. The first apparatus may pre-allocate some or all of the first time domain resources to data transmission between the first apparatus and another apparatus other than the second apparatus, or to data transmission between the second apparatus and another apparatus other than the first apparatus, or to data transmission between other apparatuses other than the first apparatus and the second apparatus. In this way, the first apparatus may send, based on an actual transmission status of data on the time domain resource 1, the second information to indicate an apparatus that uses the some or all of the first time domain resources. In this way, a time domain resource conflict is avoided, and time domain resource utilization can be improved.

In step S42, the first apparatus indicates the start moment K to the second apparatus. Next, the first apparatus and the second apparatus start to perform data transmission at the start moment K, that is, perform content shown in step S43.

S43: The second apparatus sends a first data packet to the first apparatus at a start moment K, and correspondingly, the first apparatus receives the first data packet. Alternatively, the first apparatus sends the second data packet to the second apparatus at the start moment K, and correspondingly, the second apparatus receives the second data packet.

If the first apparatus is a receiving node, and the second apparatus is a sending node, the second apparatus may determine the start moment K implicitly or explicitly indicated by the second information, and start to send the first data packet to the first apparatus at the start moment K. That the second apparatus starts to send the first data packet to the first apparatus at the start moment K may be understood as that the second apparatus starts to exchange a necessary signal and/or necessary control information with the first apparatus at the moment K, and starts to send the first data packet to the first apparatus; or may be understood as that the second apparatus starts to send the first data packet to the first apparatus at the moment K. The necessary signal may include one or more of a preamble signal, a synchronization signal, or a reference signal. The necessary control information is necessary control information required for transmitting the first data packet, for example, one or more of information such as modulation scheme information of transmitting the first data packet, coding scheme information, length information of the first data packet, resource time length information of transmitting the first data packet, or bandwidth resources.

For example, a moment at which the second information is received implicitly indicates the start moment K, and the second apparatus starts to send the first data packet to the first apparatus at the moment at which the second information is received.

Alternatively, there is the first interval between the start moment K and the moment at which the second information is received. After receiving the second information, the second apparatus determines the start moment K based on the moment at which the second information is received and the first interval, and then starts to send the first data packet to the first apparatus at the start moment K.

In another example, the receiving completion moment of the second information implicitly indicates the start moment K, and the second apparatus starts to send the first data packet to the first apparatus at the receiving completion moment of the second information.

Alternatively, there is the second interval between the start moment K and the receiving completion moment of the second information. After receiving the second information, the second apparatus determines the start moment K based on the receiving completion moment of the second information and the second interval, and then starts to send the first data packet to the first apparatus at the start moment K.

In still another example, the second information explicitly indicates the start moment K. For example, the second information includes time domain information related to the start moment K. After receiving the second information, the second apparatus determines the start moment K based on the time domain information related to the start moment K, and then starts to send the first data packet to the first apparatus at the start moment K.

Further, after step S43, the second apparatus may further receive an ACK message or a NACK message from the first apparatus. For example, when the second apparatus receives the ACK message from the first apparatus, it indicates that the first apparatus correctly receives the first data packet from the second apparatus. In this case, one-way data transmission between the first apparatus and the second apparatus on the first time domain resource ends. In another example, if the second apparatus receives the NACK message from the first apparatus, it indicates that the first apparatus does not correctly receive the first data packet from the second apparatus. For example, the first data packet is not successfully received, or the first data packet fails to be decoded, or transmission duration of the first data packet exceeds specified duration. In this case, the second apparatus may send the first data packet to the first apparatus again on the first time domain resource. For details, refer to content shown in FIG. 2.

If the first apparatus is a sending node, and the second apparatus is a receiving node, the first apparatus may start to send the second data packet to the second apparatus at the start moment K. That the first apparatus starts to send the first data packet to the second apparatus at the start moment K may be understood as that the first apparatus starts to exchange a necessary signal and/or necessary control information with the second apparatus at the start moment K, and starts to send the second data packet to the second apparatus; or may be understood as that the first apparatus directly starts to send the second data packet to the second apparatus at the start moment K. The necessary signal may include one or more of a preamble signal, a synchronization signal, or a reference signal. When the sending moment of the second information is equal to the start moment K, the second information may also carry or indicate necessary control information required for sending the second data packet, or the second information is also a part of interaction of necessary control information required for sending the second data packet. The necessary control information required of transmitting the second data packet may include one or more of information such as modulation scheme information of transmitting the second data packet, coding scheme information, length information of the second data packet, resource time length information of transmitting the second data packet, or bandwidth resources. For a manner of determining the start moment K, refer to the content described in step S42. Details are not described herein again.

Further, after step S43, the first apparatus may further receive an ACK message or a NACK message from the second apparatus. For example, when the first apparatus receives the ACK message from the second apparatus, it indicates that the second apparatus correctly receives the second data packet from the first apparatus. In this case, one-way data transmission between the first apparatus and the second apparatus on the first time domain resource ends. In another example, if the first apparatus receives the NACK message from the second apparatus, it indicates that the second apparatus does not correctly receive the second data packet from the first apparatus. For example, the second data packet is not successfully received, or the second data packet fails to be decoded, or transmission duration of the second data packet exceeds specified duration. In this case, the first apparatus may send the second data packet to the second apparatus again on the first time domain resource. For details, refer to content shown in FIG. 2.

In the foregoing embodiments of this application, the first apparatus may configure at least one time domain resource for the second apparatus, and then send the second information to the second apparatus to indicate the start moment K for performing the data transmission with the second apparatus. The data transmission is performed in the first time domain resource. The first time domain resource is one of the at least one time domain resource. In other words, when the data transmission between the first apparatus and the second apparatus starts is determined by the second information sent by the first apparatus. This means that through the method provided in embodiments of this application, the first apparatus may further indicate a start moment of data transmission with another apparatus. In this way, a resource conflict can be avoided, and resource use flexibility can be improved.

In a possible implementation, the first apparatus may send fourth information to the third apparatus on a second time domain resource. The fourth information indicates a start moment H of data transmission between the first apparatus and the third apparatus. A time domain resource used for the data transmission between the first apparatus and the third apparatus belongs to the second time domain resource, and the second time domain resource is continuous in time domain. In addition, a start moment of the second time domain resource is later than the start moment of the first time domain resource, and there is an overlapping part (or a superimposing part) between the second time domain resource and the first time domain resource. The start moment H belongs to the overlapping part between the second time domain resource and the first time domain resource. For example, in step S41, the first apparatus may allocate a second half of continuous time domain resource in the first time domain resource to the third apparatus.

In the foregoing implementation, after the data transmission between the first apparatus and the second apparatus on the first time domain resource is completed (for example, the first data packet and/or the second data packet are/is correctly received, or the data transmission between the first apparatus and the second apparatus is stopped), and the first time domain resource is remaining, the first apparatus may indicate, at a moment in the overlapping part, a start moment of the data transmission between the first apparatus and the third apparatus. In other words, in the foregoing implementation, the first apparatus may allocate a remaining time domain resource from the data transmission between the first apparatus and the second apparatus for data transmission with another apparatus (or for data transmission between the second apparatus and another apparatus other than the first apparatus, or for data transmission between other apparatus other than the first apparatus and the second apparatus). In this way, a waste of the remaining time domain resource can be avoided, and time domain resource utilization can be improved.

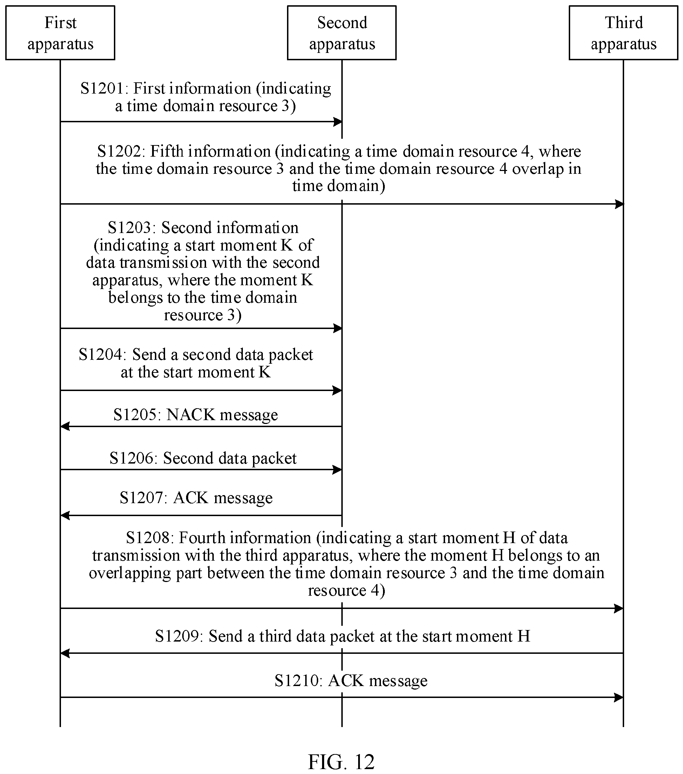

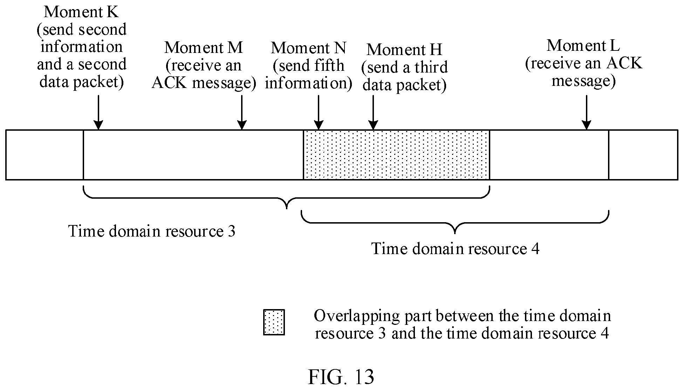

The following describes the foregoing implementations with reference to FIG. 12 and FIG. 13.

FIG. 12 is a schematic flowchart of a resource indication method according to an embodiment of this application. An example in which the method may be applied to the network architecture shown in any one of FIG. 1A to FIG. 1C is used. A first apparatus, a second apparatus, and a third apparatus may be located in a same communication domain, the first apparatus is a master node, and the second apparatus and the third apparatus are slave nodes.

S1201: The first apparatus sends first information to the second apparatus, and correspondingly, the second apparatus receives the first information.

The first information indicates a time domain resource 3, and the time domain resource 3 is continuous in time domain. For example, the first apparatus may allocate the time domain resource 3 to the second apparatus, and a time domain resource used for data transmission between the first apparatus and the second apparatus belongs to the time domain resource 3. For a specific implementation process, refer to content shown in step S41. Details are not described herein again.

S1202: The first apparatus sends fifth information to the third apparatus, and correspondingly, the third apparatus receives the fifth information.

The fifth information indicates a time domain resource 4 that is continuous in time domain. A start moment of the time domain resource 4 is later than a start moment of the time domain resource 3, and the time domain resource 4 overlaps the time domain resource 3 in time domain. For example, the first apparatus may allocate the time domain resource 4 to the third apparatus, and a time domain resource used for data transmission between the first apparatus and the third apparatus belongs to the time domain resource 4. For a specific implementation process, refer to content shown in step S41. Details are not described herein again.

S1203: The first apparatus sends second information to the second apparatus on the time domain resource 3, and correspondingly, the second apparatus receives the second information.

The second information includes identification information of the second apparatus. The second information indicates a start moment K of the data transmission between the first apparatus and the second apparatus. For example, the second information may implicitly or explicitly indicate the start moment K. Optionally, before S1203, the first apparatus may further determine that the second apparatus sends the second information on the time domain resource 3. For a specific implementation process of step S1203, refer to content shown in step S42. Details are not described herein again.

For ease of understanding, in embodiments of this application, an example in which the data transmission between the first apparatus and the second apparatus is one-way data transmission in which the first apparatus sends a second data packet to the second apparatus is used for description.

S1204: The first apparatus starts to send the second data packet to the second apparatus at the start moment K, and correspondingly, the second apparatus receives the second data packet.

S1205: The second apparatus sends a NACK message to the first apparatus, and correspondingly, the first apparatus receives the NACK message.

For example, the second apparatus sends the NACK message to the first apparatus at a moment that is in the time domain resource 3 and that is later than the start moment K, indicating that the second apparatus does not correctly receive the second data packet from the first apparatus.

S1206: The first apparatus sends the second data packet to the second apparatus, and correspondingly, the second apparatus receives the second data packet.

For example, the first apparatus may retransmit the second data packet to the second apparatus at a moment that is in the time domain resource 3 and that is later than the moment K.

S1207: The second apparatus sends an ACK message to the first apparatus, and correspondingly, the first apparatus receives the ACK message.

The second apparatus sends an ACK message to the first apparatus, indicating that the second apparatus correctly receives the second data packet of the first apparatus. In this case, the data transmission between the first apparatus and the second apparatus on the time domain resource 3 ends, and there is a remaining time domain resource 3.

S1208: The first apparatus sends fourth information to the third apparatus on the time domain resource 4, and correspondingly, the third apparatus receives the fourth information.

The fourth information includes identification information of the third apparatus. The fourth information indicates a start moment H of the data transmission between the first apparatus and the third apparatus. For example, the fourth information may implicitly or explicitly indicate the start moment H. Optionally, before S1208, the first apparatus may further determine that the third apparatus sends the fourth information on the time domain resource 4. For a specific implementation process of step S 1208, refer to content shown in step S42. Details are not described herein again.

For example, the first apparatus may send the fourth information to the third apparatus in an overlapping part between the time domain resource 3 and the time domain resource 4. Further, the start moment H may belong to the overlapping part between the time domain resource 3 and the time domain resource 4. Because the data transmission between the first apparatus and the second apparatus on the time domain resource 3 has been completed, and a remaining time domain resource in the time domain resource 3 is in an idle state, the first apparatus may use the remaining time domain resource in the time domain resource 3 for data transmission with another apparatus, so that a waste of time domain resources is avoided, and utilization of time domain resources can be improved.

For ease of understanding, in embodiments of this application, an example in which the data transmission between the first apparatus and the third apparatus is one-way data transmission in which the third apparatus sends a third data packet to the first apparatus is used for description.

S1209: The third apparatus starts to send a third data packet to the first apparatus at the start moment H, and correspondingly, the first apparatus receives the third data packet from the third apparatus.

S1210: The first apparatus sends an ACK message to the third apparatus, and correspondingly, the third apparatus receives the ACK message.

For example, the first apparatus sends the ACK message to the first apparatus at a moment that is in the time domain resource 3 or the time domain resource 4 and that is later than the moment H, indicating that the first apparatus correctly receives the third data packet from the third apparatus.

As shown in FIG. 13, the time domain resource 3 and the time domain resource 4 overlap in time domain, and the start moment of the time domain resource 3 is earlier than the start moment of the time domain resource 4. The first apparatus sends the second information and the second data packet to the second apparatus at the moment K of the time domain resource 3, and receives the ACK message of the second apparatus at a moment M of the time domain resource 3. In other words, the data transmission between the first apparatus and the second apparatus on the time domain resource 3 ends, and a remaining time domain resource in the time domain resource 3 is in an idle state. Further, the first apparatus sends the fifth information to the third apparatus at a moment N. The moment N belongs to the overlapping part between the time domain resource 3 and the time domain resource 4 and is later than the moment M. After receiving the fifth information, the third apparatus sends the third data packet to the first apparatus at the moment H, and receives the ACK message from the first apparatus at a moment L of the time domain resource 4. The moment H belongs to the overlapping part between the time domain resource 3 and the time domain resource 4, and is later than the moment N. In other words, the data transmission between the first apparatus and the third apparatus occupies the remaining time domain resource in the time domain resource 3. In this way, a waste of the remaining time domain resource in the time domain resource 3 can be avoided, and utilization of the time domain resource can be improved.

It should be noted that a sequence of the steps shown in FIG. 12 is merely an example. This is not limited in embodiments of this application. For example, the first apparatus may send the fifth information to the third apparatus before step S1203, or may send the fifth information to the third apparatus after step S1203 and before step S1208. In another example, the first apparatus may first send the second information to the second apparatus, and then send the second data packet to the second apparatus, or may send the second information and the second data packet to the second apparatus at the same time. In addition, a quantity of times of transmission of the second data packet and a quantity of times of transmission of the third data packet in FIG. 12 are merely examples. This is not limited in embodiments of this application.

In another possible implementation, there may be an overlapping part between the first time domain resource and a third time domain resource, and a start moment of the first time domain resource is later than a start moment of the third time domain resource. The third time domain resource is continuous in time domain. A time domain resource used for data transmission between the first apparatus and a fourth apparatus belongs to the third time domain resource, and the start moment K may belong to the overlapping part between the third time domain resource and the first time domain resource. For example, in step S41, the first apparatus may allocate a second half of continuous time domain resource in the third time domain resource to the second apparatus.

In the foregoing implementation, because the first apparatus flexibly determines when the data transmission between the first apparatus and the second apparatus starts, after the data transmission between the first apparatus and the fourth apparatus on the third time domain resource ends, and there is still a remaining third time domain resource, the first apparatus may indicate a moment in the remaining time domain resource as a start moment of the data transmission between the first apparatus and the second apparatus. In other words, the first apparatus may configure a remaining time domain resource (or a remaining time domain resource for data transmission between the second apparatus and another apparatus other than the first apparatus, or a remaining time domain resource for data transmission between the first apparatus and another apparatus other than the second apparatus) from data transmission between the first apparatus and another apparatus for data transmission with the second apparatus. In this way, a waste of the remaining time domain resource can be avoided, and time domain resource utilization can be improved.

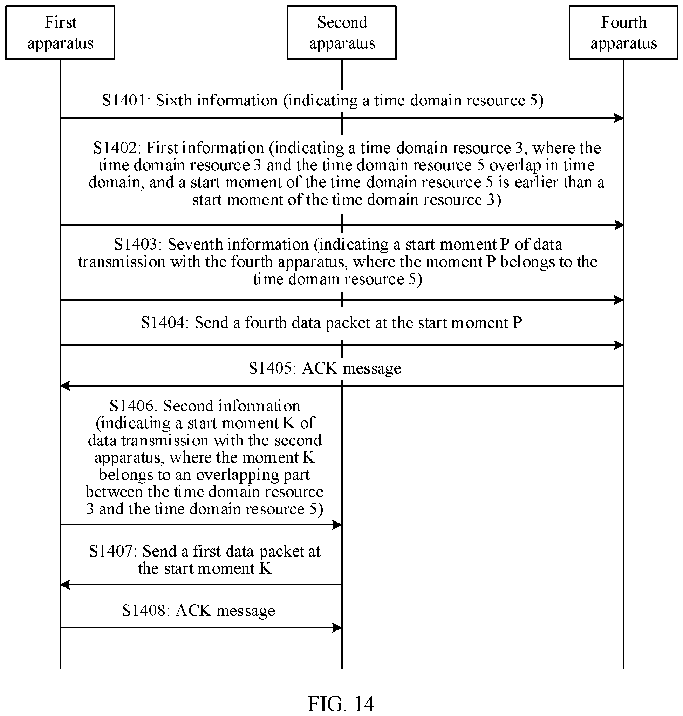

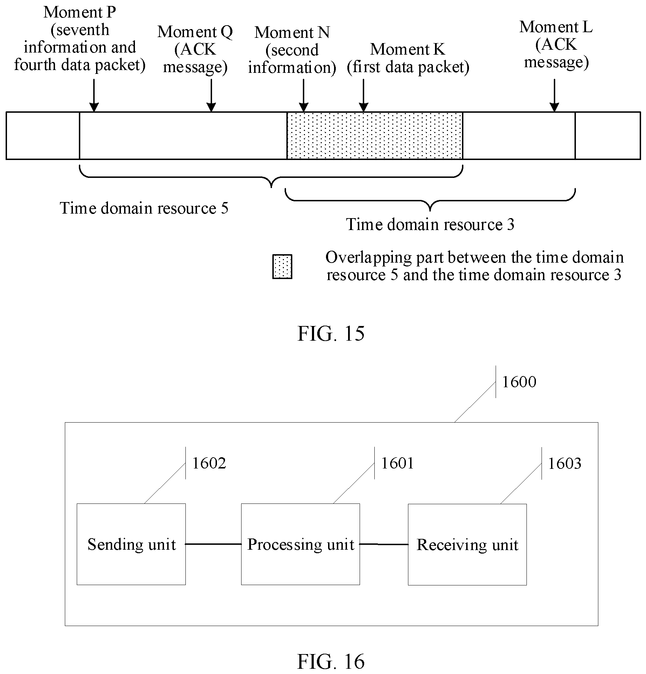

The following describes the foregoing implementations with reference to FIG. 14 and FIG. 15.

FIG. 14 is another schematic flowchart of a resource indication method according to an embodiment of this application. An example in which the method may be applied to the network architecture shown in any one of FIG. 1A to FIG. 1C is used. A first apparatus, a second apparatus, and a fourth apparatus may be located in a same communication domain, the first apparatus is a master node, and the second apparatus and the fourth apparatus are slave nodes.

S1401: The first apparatus sends sixth information to the fourth apparatus, and correspondingly, the fourth apparatus receives the sixth information.

The sixth information indicates a time domain resource 5, and the time domain resource 5 is continuous in time domain. For example, the first apparatus may allocate the time domain resource 5 to the fourth apparatus, and a time domain resource used for data transmission between the first apparatus and the fourth apparatus belongs to the time domain resource 5. For a specific implementation process, refer to content shown in step S41. Details are not described herein again.

For ease of understanding embodiments of this application, data transmitted between the first apparatus and the fourth apparatus is referred to as a fourth data packet for description below.

S1402: The first apparatus sends first information to the second apparatus, and correspondingly, the second apparatus receives the first information.

The first information indicates a time domain resource 3, and the time domain resource 3 is continuous in time domain. In addition, a start moment of the time domain resource 3 is later than a start moment of the time domain resource 5, and there is an overlapping part between the time domain resource 3 and the time domain resource 5. For example, the first apparatus may allocate the time domain resource 3 to the second apparatus, and a time domain resource used for data transmission between the first apparatus and the second apparatus belongs to the time domain resource 3. For a specific implementation process, refer to content shown in step S41. Details are not described herein again.

S1403: The first apparatus sends seventh information to the fourth apparatus on the time domain resource 5, and correspondingly, the fourth apparatus receives the seventh information.

The seventh information includes identification information of the fourth apparatus. The seventh information indicates a start moment P of the data transmission between the first apparatus and the fourth apparatus. For example, the seventh information may implicitly or explicitly indicate the start moment P. Optionally, before S1403, the first apparatus may further determine that the fourth apparatus sends the seventh information on the time domain resource 5. For a specific implementation process of step S1403, refer to content shown in step S42. Details are not described herein again.

S1404: The first apparatus starts to send the fourth data packet to the fourth apparatus at the start moment P, and correspondingly, the fourth apparatus receives the fourth data packet.

For ease of understanding, in embodiments of this application, an example in which the data transmission between the first apparatus and the fourth apparatus is one-way data transmission in which the first apparatus sends a fourth data packet to the fourth apparatus is used for description.

S1405: The fourth apparatus sends an ACK message to the first apparatus, and correspondingly, the first apparatus receives the ACK message.

For example, the fourth apparatus sends the ACK message to the first apparatus at a moment that is in the time domain resource 5 and that is later than the start moment P, indicating that the fourth apparatus correctly receives the fourth data packet from the first apparatus. In this case, the data transmission between the first apparatus and the fourth apparatus on the time domain resource 5 ends, and there is still a remaining time domain resource 5.

S1406: The first apparatus sends second information to the second apparatus on the time domain resource 3, and correspondingly, the second apparatus receives the second information.

The second information includes identification information of the second apparatus. The second information indicates a start moment K of the data transmission between the first apparatus and the second apparatus. For example, the second information may implicitly or explicitly indicate the start moment K. Optionally, before S1406, the first apparatus may further determine that the second apparatus sends the second information on the time domain resource 3. For a specific implementation process of step S1406, refer to content shown in step S42. Details are not described herein again.

For example, the first apparatus may send the second information to the second apparatus in an overlapping part between the time domain resource 3 and the time domain resource 5. Further, the start moment K may belong to the overlapping part between the time domain resource 3 and the time domain resource 5. Because the data transmission between the first apparatus and the fourth apparatus on the time domain resource 5 has been completed, and a remaining time domain resource in the time domain resource 5 is in an idle state, the first apparatus may use the remaining time domain resource in the time domain resource 5 for data transmission with another apparatus, so that a waste of time domain resources is avoided, and utilization of time domain resources can be improved.

S1407: The second apparatus starts to send a first data packet to the first apparatus at a start moment K, and correspondingly, the first apparatus receives the first data packet from the second apparatus.

For ease of understanding, in embodiments of this application, an example in which the data transmission between the first apparatus and the second apparatus is one-way data transmission in which the second apparatus sends a first data packet to the first apparatus is used for description.

S1408: The first apparatus sends an ACK message to the second apparatus, and correspondingly, the second apparatus receives the ACK message.

For example, the first apparatus sends the ACK message to the second apparatus at a moment that is in the time domain resource 3 or the time domain resource 5 and that is later than the moment K, indicating that the first apparatus correctly receives the first data packet from the second apparatus.

As shown in FIG. 15, the time domain resource 3 and the time domain resource 5 overlap in time domain, and the start moment of the time domain resource 5 is earlier than the start moment of the time domain resource 3. The first apparatus sends a seventh message and the fourth data packet to the fourth apparatus at the moment P of the time domain resource 5, and receives the ACK message of the fourth apparatus at a moment Q of the time domain resource 5. In other words, the data transmission between the first apparatus and the fourth apparatus on the time domain resource 5 ends, and there is still a remaining time domain resource 5. Further, the first apparatus sends the second information to the second apparatus at a moment N. The moment N belongs to the overlapping part between the time domain resource 3 and the time domain resource 5 and is later than the moment Q. After receiving the second information, the second apparatus sends the first data packet to the first apparatus at the moment K, and receives the ACK message from the first apparatus at a moment L of the time domain resource 3. The moment K belongs to the overlapping part between the time domain resource 3 and the time domain resource 5, and is later than the moment N. In other words, the data transmission between the first apparatus and the second apparatus occupies the remaining time domain resource in the time domain resource 5. In this way, a waste of the remaining time domain resource in the time domain resource 5 can be avoided, and utilization of the time domain resource can be improved.

It should be noted that a sequence of the steps shown in FIG. 14 is merely an example. This is not limited in embodiments of this application. For example, the first apparatus may send the first information to the second apparatus before step S1403, or may send the first information to the second apparatus after step S1403 and before step S1406. In addition, a quantity of times of transmission of the first data packet and a quantity of times of transmission of the fourth data packet in FIG. 14 are merely examples. This is not limited in embodiments of this application.

In the foregoing embodiments provided in this application, the methods provided in embodiments of this application are separately described from a perspective of interaction between the first apparatus and the second apparatus. To implement functions in the method provided in embodiments of this application, the first apparatus and the second apparatus may include a hardware structure and/or a software module, and implement the functions in a form of the hardware structure, the software module, or a combination of the hardware structure and the software module. Whether one of the foregoing functions is performed in the manner of a hardware structure, a software module, or a hardware structure and a software module depends on a specific application and design constraints of the technical solutions.

FIG. 16 is a schematic diagram of a structure of a resource indication apparatus 1600. The resource indication apparatus 1600 may be the first apparatus in the embodiment shown in FIG. 4, FIG. 12, or FIG. 14, and can implement the functions of the first apparatus in the method provided in embodiments of this application. Alternatively, the resource indication apparatus 1600 may be an apparatus that can support the first apparatus in implementing the functions of the first apparatus in the method provided in embodiments of this application. The resource indication apparatus 1600 may be a hardware structure, a software module, or a combination of the hardware structure and the software module. The resource indication apparatus 1600 may be implemented by a chip system. In embodiments of this application, the chip system may include a chip, or may include a chip and another discrete device.

The resource indication apparatus 1600 may include a processing unit 1601, a sending unit 1602, and a receiving unit 1603.

For example, the processing unit 1601 is configured to determine first information. The sending unit 1602 is configured to send first information, where the first information indicates at least one time domain resource, and each time domain resource is continuous in time domain. The sending unit 1602 is configured to send second information to a second apparatus on a first time domain resource, where the second information indicates a start moment K of data transmission between the resource indication apparatus 1600 and the second apparatus, a time domain resource used for the data transmission between the resource indication apparatus 1600 and the second apparatus belongs to the first time domain resource, and the first time domain resource is one of the at least one time domain resource.

In an optional implementation, before the resource indication apparatus 1600 sends the second information to the second apparatus on the first time domain resource, the processing unit 1601 is configured to determine to send the second information to the second apparatus on the first time domain resource.

In an optional implementation, the receiving unit 1603 is configured to receive a first data packet from the second apparatus on the first time domain resource.

Alternatively, the sending unit 1602 is configured to send a second data packet to the second apparatus on the first time domain resource.

Alternatively, the sending unit 1602 is configured to send a second data packet to the second apparatus on the first time domain resource, and the receiving unit 1603 is configured to receive a first data packet from the second apparatus on the first time domain resource.

In an optional implementation, the second information includes identification information of the second apparatus, or includes identification information of a communication link between the resource indication apparatus 1600 and the second apparatus, or includes identification information of the second apparatus and identification information of a communication link between the resource indication apparatus 1600 and the second apparatus.

In an optional implementation, a time domain resource for the second information indicates the start moment K.

In an optional implementation, that the time domain resource for the second information indicates the start moment K may be:
a sending moment of the second information is equal to the start moment K;
a sending completion moment of the second information is equal to the start moment K;
there is a first interval between a sending moment of the second information and the start moment K; or
there is a first interval between a sending completion moment of the second information and the start moment K, where
the first interval is predefined or configured.

In an optional implementation, the first time domain resource includes N time domain resource units, and N is a positive integer greater than 0; and the second information indicates a time domain resource unit to which the start moment K belongs, and the time domain resource unit to which the start moment K belongs is an M^{th} time domain resource unit in the N time domain resource units.

In an optional implementation, the start moment K is a start moment or an end moment of the M^{th} time domain resource unit.

In an optional implementation, the sending unit 1602 is specifically configured to start to send the second information from an L^{th} time domain resource unit in the N time domain resource units, where L is a positive integer greater than 0 and less than or equal to M.

In an optional implementation, the sending unit 1602 is specifically configured to start to send the second information from a start moment of the L^{th} time domain resource unit.

In an optional implementation, the sending unit 1602 is further configured to send third information, where the third information indicates a configuration of the time domain resource unit.

In an optional implementation, the sending unit 1602 is further configured to send fourth information to a third apparatus on a second time domain resource, where the fourth information indicates a start moment H of data transmission between the resource indication apparatus 1600 and the third apparatus, a time domain resource used for the data transmission between the resource indication apparatus 1600 and the third apparatus belongs to the second time domain resource, the second time domain resource is continuous in time domain, there is an overlapping part between the second time domain resource and the first time domain resource, and the start moment H may belong to the overlapping part between the second time domain resource and the first time domain resource.

In an optional implementation, there may be an overlapping part between the first time domain resource and a third time domain resource, and a start moment of the first time domain resource is later than a start moment of the third time domain resource. The third time domain resource is continuous in time domain. A time domain resource used for data transmission between the resource indication apparatus 1600 and a fourth apparatus belongs to the third time domain resource, and the start moment K may belong to the overlapping part between the third time domain resource and the first time domain resource.

The sending unit 1602 and/or the receiving unit 1603 are/is configured to communicate with the resource indication apparatus 1600 and another module, and may be a circuit, a device, an interface, a bus, a software module, a transceiver, or any other apparatus that can implement communication.

All related content of the steps in the foregoing method embodiments may be cited in function descriptions of the corresponding functional modules. Details are not described herein again.

In embodiments of this application, the module division is an example, and is merely logical function division and may be another division manner in actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

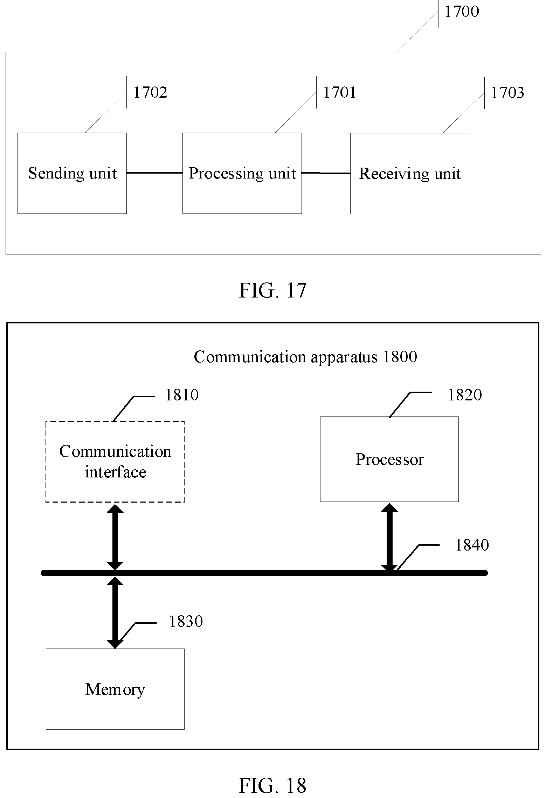

FIG. 17 is a schematic diagram of a structure of a communication apparatus 1700. The communication apparatus 1700 may be the second apparatus in the embodiment shown in FIG. 4, FIG. 12, or FIG. 14, and can implement the functions of the second apparatus in the method provided in embodiments of this application. Alternatively, the communication apparatus 1700 may be an apparatus that can support the second apparatus in implementing the functions of the second apparatus in the method provided in embodiments of this application. The communication apparatus 1700 may be a hardware structure, a software module, or a combination of the hardware structure and the software module. The communication apparatus 1700 may be implemented by a chip system. In embodiments of this application, the chip system may include a chip, or may include a chip and another discrete device.

The communication apparatus 1700 may include a processing unit 1701, a sending unit 1702, and a receiving unit 1703.

For example, the receiving unit 1703 is configured to: receive first information from a first apparatus, where the first information indicates at least one time domain resource, and each time domain resource is continuous in time domain; and receive second information from the first apparatus on a first time domain resource, where the second information indicates a start moment K of data transmission between the resource indication apparatus and the first apparatus, a time domain resource used for the data transmission between the resource indication apparatus and the first apparatus belongs to the first time domain resource, and the first time domain resource is one of the at least one time domain resource.

In an optional implementation, the receiving unit 1703 is further configured to receive a second data packet from the first apparatus on the first time domain resource.

Alternatively, the sending unit 1702 is further configured to send a first data packet to the first apparatus on the first time domain resource.

Alternatively, the sending unit 1702 is further configured to send a first data packet to the first apparatus on the first time domain resource, and the receiving unit 1703 is further configured to receive a second data packet from the first apparatus on the first time domain resource.

In an optional implementation, the second information includes identification information of the communication apparatus 1700, or includes identification information of a communication link between the first apparatus and the communication apparatus 1700, or includes identification information of the communication apparatus 1700 and identification information of a communication link between the first apparatus and the communication apparatus 1700.

In an optional implementation, a time domain resource for the second information indicates the start moment K.

In an optional implementation, that the time domain resource for the second information indicates the start moment K may be:
a moment at which the second information is received is equal to the start moment K;
a receiving completion moment of the second information is equal to the start moment K;
there is a first interval between a moment at which the second information is received and the start moment K; or
there is a first interval between a receiving completion moment of the second information and the start moment K, where
the first interval is predefined or configured.

In an optional implementation, the first time domain resource includes N time domain resource units, and N is a positive integer greater than 0; and the second information indicates a time domain resource unit to which the start moment K belongs, and the time domain resource unit to which the start moment K belongs is an M^{th} time domain resource unit in the N time domain resource units.

In an optional implementation, the start moment K is a start moment or an end moment of the M^{th} time domain resource unit.

In an optional implementation, the receiving unit 1703 is specifically configured to start to receive the second information from the first apparatus from an L^{th} time domain resource unit in the N time domain resource units, where L is a positive integer greater than 0 and less than or equal to M.

In an optional implementation, the receiving unit 1703 is specifically configured to start to receive the second information from a start moment of the L^{th} time domain resource unit.

In an optional implementation, the processing unit 1701 is configured to start to detect the second information from a start moment of each time domain resource unit in the N time domain resource units.

In an optional implementation, the receiving unit 1703 is further configured to receive third information from the first apparatus, where the third information indicates a configuration of the time domain resource unit.

The sending unit 1702 and/or the receiving unit 1703 are/is further configured to communicate with the communication apparatus 1700 and another module, and may be a circuit, a device, an interface, a bus, a software module, a transceiver, or any other apparatus that can implement communication.

All related content of the steps in the foregoing method embodiments may be cited in function descriptions of the corresponding functional modules. Details are not described herein again.

In embodiments of this application, the module division is an example, and is merely logical function division and may be another division manner in actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

FIG. 18 shows a communication apparatus 1800 according to an embodiment of this application. The communication apparatus 1800 may be the first apparatus in the embodiment shown in FIG. 4, FIG. 12, or FIG. 14, and can implement the functions of the first apparatus in the method provided in embodiments of this application. Alternatively, the communication apparatus 1800 may be an apparatus that can support the first apparatus in implementing the functions of the first apparatus in the method provided in embodiments of this application. The communication apparatus 1800 may be a chip system. In embodiments of this application, the chip system may include a chip, or may include a chip and another discrete device.

In hardware implementation, the sending unit 1602 and the receiving unit 1603 may be a transceiver, and the transceiver is integrated into the communication apparatus 1800 to form a communication interface 1810.

The communication apparatus 1800 may include at least one processor 1820, configured to implement or support the communication apparatus 1800 in implementing the first apparatus in the method provided in embodiments of this application. For example, the processor 1820 may allocate at least one time domain resource to the second apparatus, and determine to send the second information to the second apparatus. For details, refer to detailed descriptions in the method example. Details are not described herein again.

The communication apparatus 1800 may further include at least one memory 1830, configured to store program instructions and/or data. The memory 1830 is coupled to the processor 1820. The coupling in embodiments of this application is an indirect coupling or a communication connection between apparatuses, units, or modules, may be in an electrical, a mechanical, or another form, and is used for information exchange between the apparatuses, the units, or the modules. The processor 1820 may cooperate with the memory 1830. The processor 1820 may execute the program instructions stored in the memory 1830. At least one of the at least one memory may be included in the processor.

The communication apparatus 1800 may further include the communication interface 1810, configured to communicate with another device through a transmission medium, so that the communication interface 1810 can be used by an apparatus in the communication apparatus 1800 to communicate with the another device. For example, the communication apparatus 1800 is the first apparatus, and the another device may be the second apparatus. The processor 1820 may send and receive data through the communication interface 1810. The communication interface 1810 may be specifically a transceiver.

A specific connection medium between the communication interface 1810, the processor 1820, and the memory 1830 is not limited in embodiments of this application. In embodiments of this application, the memory 1830, the processor 1820, and the communication interface 1810 are connected through a bus 1840 in FIG. 18. The bus is represented by a thick line in FIG. 18. A manner of connection between other components is merely an example for description, and is not limited thereto. The bus may be classified into an address bus, a data bus, a control bus, and the like. For ease of representation, only one thick line is used to represent the bus in FIG. 18, but this does not mean that there is only one bus or only one type of bus.

In embodiments of this application, the processor 1820 may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor, any conventional processor, or the like. The steps of the methods disclosed with reference to embodiments of this application may be directly implemented by a hardware processor, or may be implemented by using a combination of hardware in a processor and a software module.

In embodiments of this application, the memory 1830 may be a non-volatile memory, such as a hard disk drive (hard disk drive, HDD) or a solid-state drive (solid-state drive, SSD), or may be a volatile memory (volatile memory), such as a random access memory (random-access memory, RAM). The memory is any other medium that can be configured to carry or store expected program code in a form of instructions or a data structure and that can be accessed by a computer, but is not limited thereto. The memory in embodiments of this application may be alternatively a circuit or any other apparatus that can implement a storage function, and is configured to store program instructions and/or data.

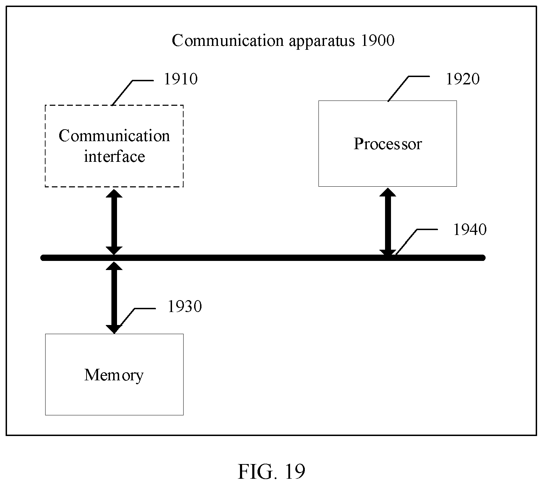

FIG. 19 shows a communication apparatus 1900 according to an embodiment of this application. The communication apparatus 1900 may be the second apparatus in the embodiment shown in FIG. 4, FIG. 12, or FIG. 14, and can implement the functions of the second apparatus in the method provided in embodiments of this application. Alternatively, the communication apparatus 1900 may be an apparatus that can support the first apparatus in implementing the functions of the first apparatus in the method provided in embodiments of this application. The communication apparatus 1900 may be a chip system. In embodiments of this application, the chip system may include a chip, or may include a chip and another discrete device.

In hardware implementation, the sending unit 1702 and the receiving unit 1703 may be a transceiver, and the transceiver is integrated into the communication apparatus 1900 to form a communication interface 1910.

The communication apparatus 1900 may include at least one processor 1920, configured to implement or support the communication apparatus 1900 in implementing the first apparatus in the method provided in embodiments of this application. For example, the processor 1920 may detect a second information or the like at a start location or an end location of each time domain resource unit. For details, refer to detailed descriptions in the method example. Details are not described herein again.

The communication apparatus 1900 may further include at least one memory 1930, configured to store program instructions and/or data. The memory 1930 is coupled to the processor 1920. The coupling in embodiments of this application is an indirect coupling or a communication connection between apparatuses, units, or modules, may be in an electrical, a mechanical, or another form, and is used for information exchange between the apparatuses, the units, or the modules. The processor 1920 may cooperate with the memory 1930. The processor 1920 may execute the program instructions stored in the memory 1930. At least one of the at least one memory may be included in the processor.

The communication apparatus 1900 may further include the communication interface 1910, configured to communicate with another device through a transmission medium, so that the communication interface 1910 can be used by an apparatus in the communication apparatus 1900 to communicate with the another device. For example, the communication apparatus 1900 is the second apparatus, and the another device may be the first apparatus. The processor 1920 may send and receive data through the communication interface 1910. The communication interface 1910 may be specifically a transceiver.

A specific connection medium between the communication interface 1910, the processor 1920, and the memory 1930 is not limited in embodiments of this application. In embodiments of this application, the memory 1930, the processor 1920, and the communication interface 1910 are connected through a bus 1940 in FIG. 19. The bus is represented by a thick line in FIG. 19. A manner of connection between other components is merely an example for description, and is not limited thereto. The bus may be classified into an address bus, a data bus, a control bus, and the like. For ease of representation, only one thick line is used to represent the bus in FIG. 19, but this does not mean that there is only one bus or only one type of bus.

In embodiments of this application, the processor 1920 may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor, any conventional processor, or the like. The steps of the methods disclosed with reference to embodiments of this application may be directly implemented by a hardware processor, or may be implemented by using a combination of hardware in a processor and a software module.

In embodiments of this application, the memory 1930 may be a non-volatile memory, such as a hard disk drive (hard disk drive, HDD) or a solid-state drive (solid-state drive, SSD), or may be a volatile memory (volatile memory), such as a random access memory (random access memory, RAM). The memory is any other medium that can be configured to carry or store expected program code in a form of instructions or a data structure and that can be accessed by a computer, but is not limited thereto. The memory in embodiments of this application may be alternatively a circuit or any other apparatus that can implement a storage function, and is configured to store program instructions and/or data.

The communication apparatus in embodiments of this application may be an in-vehicle device such as an in-vehicle infotainment, an in-vehicle speaker, or an in-vehicle microphone, or may be an electronic device such as a mobile phone, a tablet computer, a desktop computer, a laptop computer, a notebook computer, an ultra-mobile personal computer (Ultra-mobile Personal Computer, UMPC), a handheld computer, a netbook, a personal digital assistant (Personal Digital Assistant, PDA), a wearable electronic device, or a virtual reality device. Alternatively, the communication apparatus in embodiments of this application may be a machine intelligent device, for example, a self-driving (self-driving) device, a transportation safety (transportation safety) device, a virtual reality (virtual reality, VR) terminal device, an augmented reality (augmented reality, AR) terminal device, an MTC device, an industrial control (industrial control) device, a telemedicine (remote medical) device, a smart grid (smart grid) device, a smart city (smart city) device, a wearable device (for example, a smart watch, a smart band, or a pedometer). Alternatively, the communication apparatus in embodiments of this application may be a short-range communication device that supports BT, BLE, or both BT and BLE technologies, or a short-range communication device that supports other possible short-range communication technologies. Alternatively, the communication apparatus in embodiments of this application may be a functional module disposed in any one of the foregoing devices, for example, a chip system.

An embodiment of this application further provides a computer-readable storage medium, including instructions. When the instructions run on a computer, the computer is enabled to perform the method performed by the first apparatus or the second apparatus in the foregoing embodiments.

An embodiment of this application further provides a computer program product, including instructions. When the instructions run on a computer, the computer is enabled to perform the method performed by the first apparatus or the second apparatus in the foregoing embodiments.

An embodiment of this application provides a chip system. The chip system includes at least one processor and an interface circuit. The processor is configured to exchange instructions and/or data through the interface circuit, to enable an apparatus in which the chip system is located to implement a function of the first apparatus in the foregoing embodiments, or to implement a function of the second apparatus in the foregoing embodiment. The chip system may include a chip, or may include a chip and another discrete device.

An embodiment of this application provides a communication system. The communication system includes the first apparatus and/or the second apparatus in the foregoing embodiments.

An embodiment of this application provides a terminal device. The terminal device includes the first apparatus and/or the second apparatus in the foregoing embodiments, or includes a chip system for implementing a function of the first apparatus and/or a chip system for implementing a function of the second apparatus.

All or some of the methods in embodiments of this application may be implemented by software, hardware, firmware, or any combination thereof. When software is used for implementation, all or some of embodiments may be implemented in a form of a computer program product. The computer program product includes one or more computer instructions. When the computer program instructions are loaded and executed on the computer, procedures or functions according to embodiments of the present invention are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, an SSD), or the like.

It is clear that, a person skilled in the art can make various modifications and variations to this application without departing from the scope of this application. This application is intended to cover these modifications and variations of this application provided that they fall within the scope of protection defined by the claims of this application and their equivalent technologies.

## Claims

1. A resource indication method, wherein the method comprises:
sending first information, wherein the first information indicates at least one time domain resource, and each time domain resource is continuous in time domain; and
sending second information to a second apparatus on a first time domain resource, wherein the second information indicates a start moment K of data transmission between a first apparatus and the second apparatus, a time domain resource used for the data transmission between the first apparatus and the second apparatus belongs to the first time domain resource, and the first time domain resource is one of the at least one time domain resource.

2. The method according to claim 1, wherein the method further comprises:
receiving a first data packet from the second apparatus on the first time domain resource; and/or
sending a second data packet to the second apparatus on the first time domain resource.

3. The method according to claim 1 or 2, wherein the second information comprises identification information of the second apparatus and/or identification information of a communication link between the first apparatus and the second apparatus.

4. The method according to any one of claims 1 to 3, wherein
a time domain resource for the second information indicates the start moment K.

5. The method according to claim 4, wherein
a sending moment of the second information is equal to the start moment K;
a sending completion moment of the second information is equal to the start moment K;
there is a first interval between a sending moment of the second information and the start moment K; or
there is a first interval between a sending completion moment of the second information and the start moment K, wherein
the first interval is predefined or configured.

6. The method according to any one of claims 1 to 5, wherein the first time domain resource comprises N time domain resource units, and N is a positive integer greater than 0; and
the second information indicates a time domain resource unit to which the start moment K belongs, and the time domain resource unit to which the start moment K belongs is an M* time domain resource unit in the N time domain resource units.

7. The method according to claim 6, wherein
the start moment K is a start moment or an end moment of the M^{th} time domain resource unit.

8. The method according to claim 6 or 7, wherein the sending second information to a second apparatus on a first time domain resource comprises:
starting to send the second information from an L^{th} time domain resource unit in the N time domain resource units, wherein L is a positive integer greater than 0 and less than or equal to M.

9. The method according to claim 8, wherein the starting to send the second information from an L^{th} time domain resource unit in the N time domain resource units comprises:
starting to send the second information from a start moment of the L^{th} time domain resource unit.

10. The method according to any one of claims 6 to 9, wherein the method further comprises:
sending third information, wherein the third information indicates a configuration of the time domain resource unit.

11. The method according to any one of claims 1 to 10, wherein the method further comprises:
sending fourth information to a third apparatus on a second time domain resource, wherein the fourth information indicates a start moment H of data transmission between the first apparatus and the third apparatus, a time domain resource used for the data transmission between the first apparatus and the third apparatus belongs to the second time domain resource, there is an overlapping part between the second time domain resource and the first time domain resource, and the start moment H belongs to the overlapping part.

12. A communication method, wherein the method comprises:
receiving first information from a first apparatus, wherein the first information indicates at least one time domain resource, and each time domain resource is continuous in time domain; and
receiving second information from the first apparatus on a first time domain resource, wherein the second information indicates a start moment K of data transmission between a second apparatus and the first apparatus, a time domain resource used for the data transmission between the second apparatus and the first apparatus belongs to the first time domain resource, and the first time domain resource is one of the at least one time domain resource.

13. The method according to claim 12, wherein the method further comprises:
receiving a second data packet from the first apparatus on the first time domain resource; and/or
sending a first data packet to the first apparatus on the first time domain resource.

14. The method according to claim 12 or 13, wherein the second information comprises identification information of the second apparatus and/or identification information of a communication link between the first apparatus and the second apparatus.

15. The method according to any one of claims 12 to 14, wherein a time domain resource for the second information indicates the start moment K.

16. The method according to claim 15, wherein
a moment at which the second information is received is equal to the start moment K;
a receiving completion moment of the second information is equal to the start moment K;
there is a first interval between a moment at which the second information is received and the start moment K; or
there is a first interval between a receiving completion moment of the second information and the start moment K, wherein
the first interval is predefined or configured.

17. The method according to any one of claims 12 to 16, wherein the first time domain resource comprises N time domain resource units, and N is a positive integer greater than 0; and
the second information indicates a time domain resource unit to which the start moment K belongs, and the time domain resource unit to which the start moment K belongs is an M* time domain resource unit in the N time domain resource units.

18. The method according to claim 17, wherein
the start moment K is a start moment or an end moment of the M^{th} time domain resource unit.

19. The method according to claim 17 or 18, wherein the receiving second information from the first apparatus on a first time domain resource comprises:
starting to receive the second information from the first apparatus from an L^{th} time domain resource unit in the N time domain resource units, wherein L is a positive integer greater than 0 and less than or equal to M.

20. The method according to claim 19, wherein the starting to receive the second information from the first apparatus from an L^{th} time domain resource unit in the N time domain resource units comprises:
starting to receive the second information from a start moment of the L^{th} time domain resource unit.

21. The method according to any one of claims 17 to 20, wherein the method further comprises:
starting to detect the second information from a start moment of each time domain resource unit in the N time domain resource units.

22. The method according to any one of claims 17 to 21, wherein the method further comprises:
receiving third information from the first apparatus, wherein the third information indicates a configuration of the time domain resource unit.

23. A communication apparatus, comprising a unit configured to implement the method according to any one of claims 1 to 11, or comprising a unit configured to implement the method according to any one of claims 12 to 22.

24. A chip system, comprising at least one processor and an interface circuit, wherein the processor is configured to exchange instructions and/or data through the interface circuit, to enable an apparatus in which the chip system is located to perform the method according to any one of claims 1 to 11, or to enable an apparatus in which the chip system is located to perform the method according to any one of claims 12 to 22.

25. A terminal device, comprising the communication apparatus according to claim 23 or the chip system according to claim 24.

26. A computer-readable storage medium, wherein the computer-readable storage medium stores instructions, and when the instructions run on a computer, the computer is enabled to perform the method according to any one of claims 1 to 11, or the computer is enabled to perform the method according to any one of claims 12 to 22.
